(19) Europäisches Patentamt
European Patent Office
Office européen des brevets

(11) **EP 4 622 323 A1**

(12) **EUROPEAN PATENT APPLICATION**
published in accordance with Art. 153(4) EPC

(43) Date of publication:
**24.09.2025 Bulletin 2025/39**

(21) Application number: **24749489.1**

(22) Date of filing: **03.01.2024**

(51) International Patent Classification (IPC):
**H04W 24/02** (2009.01)

(52) Cooperative Patent Classification (CPC):
**H04L 41/0813; H04W 24/02**

(86) International application number:
**PCT/CN2024/070345**

(87) International publication number:
**WO 2024/160007 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.02.2023 CN 202310118807**

(71) Applicant: **Huawei Technologies Co., Ltd.
Shenzhen, Guangdong 518129 (CN)**

(72) Inventors:
• **CAO, Youlong
Shenzhen, Guangdong 518129 (CN)**
• **QIN, Yi
Shenzhen, Guangdong 518129 (CN)**
• **CHEN, Erkai
Shenzhen, Guangdong 518129 (CN)**
• **XU, Rui
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **DATA TRANSMISSION METHOD AND APPARATUS**

(57) A data transmission method and an apparatus are provided, and relate to the field of wireless communication. The method includes: obtaining a first concatenated bit sequence, and outputting the first concatenated bit sequence. The first concatenated bit sequence includes a first bit sequence and a second bit sequence, the first bit sequence is bit sequences of first redundancy versions of M code blocks, the second bit sequence is bit sequences of second redundancy versions of the M code blocks, and M is a positive integer. In this way, assisting in updating an OLLA parameter of another service can be implemented, and transmission reliability of the M code blocks can be ensured.

FIG. 4

EP 4 622 323 A1

## Description

This application claims priority to Patent Application No. 202310118807.4, filed with the China National Intellectual Property Administration on February 1, 2023 and entitled "DATA TRANSMISSION METHOD AND APPARATUS", which is incorporated herein by reference in its entirety.

## TECHNICAL FIELD

This application relates to the field of wireless communication, and in particular, to a data transmission method and an apparatus.

## BACKGROUND

In a communication system, based on an open-loop link adaptation (open-loop link adaptation, OLLA) mechanism, an OLLA parameter may be adjusted, so that a data transmitting end performs channel encoding by using an OLLA parameter that matches channel quality, thereby improving a decoding success rate at a data receiving end. For example, the data transmitting end is a base station, and the data receiving end is a terminal. Data of a service 1 arrives at the base station at a moment t0, and the base station performs channel encoding on the data of the service 1 and sends encoded data to the terminal. After receiving the encoded data, the terminal performs decoding and feeds back a decoding status to the base station, so that the base station updates an OLLA parameter based on the decoding status. Subsequently, if data of the service 1 arrives at the base station again at a moment t1, the base station may perform channel encoding on the data of the service 1 based on a new OLLA parameter, and send encoded data to the terminal. However, in the foregoing process, if an interval between the moment t0 and the moment t1 is long, the base station cannot update the OLLA parameter in time.

To resolve the foregoing problem, using data of a service 2 that has a transmission requirement between the moment t0 and the moment t1 to assist in updating the OLLA parameter of the service 1 is considered. However, in a process of using the data of the service 2 to assist in updating the OLLA parameter of the service 1, how to ensure transmission reliability of the data of the service 2 is an urgent problem to be resolved.

## SUMMARY

This application provides a data transmission method and an apparatus, to assist in updating an OLLA parameter of another service and ensure data transmission reliability.

To achieve the foregoing objectives, the following technical solutions are used in embodiments of this application.

According to a first aspect, a data transmission method is provided. The method may be performed by a communication apparatus; may be performed by a module used in the communication apparatus, for example, a chip, a chip system, or a circuit; or may be implemented by a logical node, a logical module, or software that can implement all or some functions of the communication apparatus. This is not limited. For ease of description, an example in which the method is performed by the communication apparatus is used below for description. The communication apparatus is a terminal or a radio access network (radio access network, RAN) node. The method includes: obtaining a first concatenated bit sequence, where the first concatenated bit sequence includes a first bit sequence and a second bit sequence, the first bit sequence is bit sequences of first redundancy versions of M code blocks, the second bit sequence is bit sequences of second redundancy versions of the M code blocks, and M is a positive integer; and outputting the first concatenated bit sequence.

According to the method provided in the first aspect, the communication apparatus may obtain the first concatenated bit sequence, and output the first concatenated bit sequence, so that a receiving end of the first concatenated bit sequence can decode the first concatenated bit sequence. During the decoding, the receiving end not only decodes the first bit sequence in the first concatenated bit sequence, but also performs joint decoding on the first bit sequence and the second bit sequence in the first concatenated bit sequence. In this way, the RAN node may perform link adaptation based on a decoding status of the first bit sequence, to assist in updating an OLLA parameter of another service. In addition, the second bit sequence includes a bit sequence whose redundancy version is different from that of a bit sequence included in the first bit sequence. Therefore, transmission reliability of data in the first bit sequence can be ensured by using the second bit sequence.

In a possible implementation, the method further includes: receiving feedback information, where the feedback information is used to feed back whether transmission of the first bit sequence is correctly performed.

According to the foregoing possible implementation, the communication apparatus is the RAN node, and the RAN node may perform link adaptation based on the feedback information, to assist in updating the OLLA parameter of another service.

In a possible implementation, the feedback information is further used to feed back whether combined transmission of the first bit sequence and the second bit sequence is correctly performed.

According to the foregoing possible implementation, the communication apparatus is the RAN node, and the RAN node may perform link adaptation based on the feedback information, to update an OLLA parameter of a service to which the data in the first bit sequence belongs.

In a possible implementation, the method further includes: receiving or sending first indication information, where the first indication information indicates a location of the second bit sequence in the first concatenated bit sequence.

According to the foregoing possible implementation, if the communication apparatus is the terminal, the communication apparatus receives the first indication information. In this way, the communication apparatus may determine, based on the first indication information, a bit that is in the first concatenated bit sequence and that belongs to the first bit sequence and a bit that is in the first concatenated bit sequence and that belongs to the second bit sequence, to decode the first bit sequence, and perform joint decoding on the first bit sequence and the second bit sequence. If the communication apparatus is the RAN node, the communication apparatus sends the first indication information. In this way, a bit that is in the first concatenated bit sequence and that belongs to the first bit sequence and a bit that is in the first concatenated bit sequence and that belongs to the second bit sequence may be indicated to the terminal, so that the terminal decodes the first bit sequence, and performs joint decoding on the first bit sequence and the second bit sequence.

In a possible implementation, the first indication information further indicates at least one of the following: an index of the second redundancy version, a location of the first bit sequence in the first concatenated bit sequence, or M.

According to the foregoing possible implementation, if the first indication information indicates the index of the second redundancy version, the terminal may determine a redundancy version of the code block in the second bit sequence. If the first indication information indicates the location of the first bit sequence in the first concatenated bit sequence, the terminal may determine a bit sequence that is in the first concatenated bit sequence and that is the first bit sequence. If the first indication information indicates M, the terminal may determine a quantity of code blocks included in the first bit sequence and a quantity of code blocks included in the second bit sequence.

In a possible implementation, a length of a bit sequence of a first redundancy version of one of the M code blocks or a length of a bit sequence of a second redundancy version of one of the M code blocks is related to M.

According to the foregoing possible implementation, the communication apparatus may determine the length of the bit sequence of the first redundancy version of the one of the M code blocks or the length of the bit sequence of the second redundancy version of the one of the M code blocks.

In a possible implementation, the first bit sequence is concatenated with the second bit sequence, and the first bit sequence is located before the second bit sequence.

According to the foregoing possible implementation, content indicated by the first indication information can be simplified. For example, if the first indication information indicates the location of the second bit sequence in the first concatenated bit sequence and M, the terminal may determine the locations of the first bit sequence and the second bit sequence in the first concatenated bit sequence.

In a possible implementation, the first bit sequence is located at the forefront of the first concatenated bit sequence.

According to the foregoing possible implementation, the content indicated by the first indication information can be further simplified. For example, if the first indication information indicates the location of the second bit sequence in the first concatenated bit sequence, the terminal may determine the locations of the first bit sequence and the second bit sequence in the first concatenated bit sequence.

In a possible implementation, an index of the first redundancy version is 0, and the index of the second redundancy version is 1, 2, or 3.

According to the foregoing possible implementation, the communication apparatus may determine the index of the first redundancy version and the index of the second redundancy version.

According to a second aspect, a data transmission method is provided. The method may be performed by a communication apparatus; may be performed by a module used in the communication apparatus, for example, a chip, a chip system, or a circuit; or may be implemented by a logical node, a logical module, or software that can implement all or some functions of the communication apparatus. This is not limited. For ease of description, an example in which the method is performed by the communication apparatus is used below for description. The communication apparatus is a terminal or a RAN node. The method includes: obtaining a second concatenated bit sequence, where the second concatenated bit sequence includes a third bit sequence and a fourth bit sequence, the third bit sequence corresponds to first redundancy versions of M code blocks, the fourth bit sequence corresponds to second redundancy versions of the M code blocks, and M is a positive integer.

According to the method provided in the second aspect, the communication apparatus may obtain the second concatenated bit sequence, to not only decode the third bit sequence in the second concatenated bit sequence, but also perform joint decoding on the third bit sequence and the fourth bit sequence in the second concatenated bit sequence. In this way, the RAN node may perform link adaptation based on a decoding status of the third bit sequence, to assist in updating an OLLA parameter of another service. In addition, transmission reliability of data in the third bit sequence can be further ensured by using the fourth bit sequence.

In a possible implementation, the method further includes: sending feedback information, where the feedback information is used to feed back whether transmission of the third bit sequence is correctly performed.

According to the foregoing possible implementation, the communication apparatus is the terminal, and the terminal sends the feedback information, so that the RAN node can perform link adaptation based on the feedback information, to assist in updating the OLLA parameter of another service.

In a possible implementation, the feedback information is further used to feed back whether combined transmission of the third bit sequence and the fourth bit sequence is correctly performed.

According to the foregoing possible implementation, the communication apparatus is the terminal, and the terminal sends the feedback information, so that the RAN node can perform link adaptation based on the feedback information, to update an OLLA parameter of a service to which the data in the third bit sequence belongs.

In a possible implementation, the method further includes: receiving or sending first indication information, where the first indication information indicates a location of the fourth bit sequence in the second concatenated bit sequence.

According to the foregoing possible implementation, if the communication apparatus is the terminal, the communication apparatus receives the first indication information. In this way, the communication apparatus may determine, based on the first indication information, a bit that is in the second concatenated bit sequence and that belongs to the third bit sequence and a bit that is in the second concatenated bit sequence and that belongs to the fourth bit sequence, to decode the third bit sequence, and perform joint decoding on the third bit sequence and the fourth bit sequence. If the communication apparatus is the RAN node, the communication apparatus sends the first indication information. In this way, a bit that is in the second concatenated bit sequence and that belongs to the third bit sequence and a bit that is in the second concatenated bit sequence and that belongs to the fourth bit sequence may be indicated to the terminal, so that the terminal decodes the third bit sequence, and performs joint decoding on the third bit sequence and the fourth bit sequence.

In a possible implementation, the first indication information further indicates at least one of the following: an index of the second redundancy version, a location of the third bit sequence in the second concatenated bit sequence, or M.

According to the foregoing possible implementation, if the first indication information indicates the index of the second redundancy version, the terminal may determine a redundancy version of the code block in the fourth bit sequence. If the first indication information indicates the location of the third bit sequence in the second concatenated bit sequence, the terminal may determine a bit sequence that is in the second concatenated bit sequence and that is the third bit sequence. If the first indication information indicates M, the terminal may determine a quantity of code blocks included in the third bit sequence and a quantity of code blocks included in the fourth bit sequence.

In a possible implementation, a length of a bit sequence of a first redundancy version of one of the M code blocks or a length of a bit sequence of a second redundancy version of one of the M code blocks is related to M.

According to the foregoing possible implementation, the communication apparatus may determine the length of the bit sequence of the first redundancy version of the one of the M code blocks or the length of the bit sequence of the second redundancy version of the one of the M code blocks.

In a possible implementation, the third bit sequence is concatenated with the fourth bit sequence, and the third bit sequence is located before the fourth bit sequence.

According to the foregoing possible implementation, content indicated by the first indication information can be simplified. For example, if the first indication information indicates the location of the fourth bit sequence in the second concatenated bit sequence and M, the terminal may determine the locations of the third bit sequence and the fourth bit sequence in the second concatenated bit sequence.

In a possible implementation, the third bit sequence is located at the forefront of the second concatenated bit sequence.

According to the foregoing possible implementation, the content indicated by the first indication information can be further simplified. For example, if the first indication information indicates the location of the fourth bit sequence in the second concatenated bit sequence, the terminal may determine the locations of the third bit sequence and the fourth bit sequence in the second concatenated bit sequence.

In a possible implementation, an index of the first redundancy version is 0, and the index of the second redundancy version is 1, 2, or 3.

According to the foregoing possible implementation, the communication apparatus may determine the index of the first redundancy version and the index of the second redundancy version.

According to a third aspect, a communication apparatus is provided, to implement the foregoing method. The communication apparatus may be implemented by the communication apparatus in the first aspect, an apparatus including the communication apparatus, a module in the communication apparatus in the first aspect, for example, a chip, a chip system, or a circuit, or a logical node, a logical module, or software that can implement some or all functions of the communication apparatus. Alternatively, the communication apparatus may be implemented by the communication apparatus in the second aspect, an apparatus including the communication apparatus, a module in the communication apparatus in the second aspect, for example, a chip, a chip system, or a circuit, or a logical node, a logical module, or software that can implement some or all functions of the communication apparatus. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include a processing module. The processing module may be configured to implement a processing function in any one of the foregoing aspects and the possible implementations of the foregoing aspects. The processing module may be, for example, a processor.

With reference to the third aspect, in a possible implementation, the communication apparatus may further include an interface module. The interface module may also be referred to as an interface unit, and is configured to implement a sending function and/or a receiving function in any one of the foregoing aspects and the possible implementations of the foregoing aspects. The interface module may include a transceiver circuit, a transceiver machine, a transceiver, or a communication interface.

According to a fourth aspect, a communication apparatus is provided, and includes a processor. The processor is configured to: be coupled to a memory, and after reading instructions in the memory, perform the method according to any one of the foregoing aspects based on the instructions. The communication apparatus may be implemented by the communication apparatus in the first aspect, an apparatus including the communication apparatus, a module in the communication apparatus in the first aspect, for example, a chip, a chip system, or a circuit, or a logical node, a logical module, or software that can implement some or all functions of the communication apparatus. Alternatively, the communication apparatus may be implemented by the communication apparatus in the second aspect, an apparatus including the communication apparatus, a module in the communication apparatus in the second aspect, for example, a chip, a chip system, or a circuit, or a logical node, a logical module, or software that can implement some or all functions of the communication apparatus.

With reference to the fourth aspect, in a possible implementation, the communication apparatus further includes the memory. The memory is configured to store necessary program instructions and data.

With reference to the fourth aspect, in a possible implementation, the communication apparatus is a chip or a chip system. Optionally, when the communication apparatus is the chip system, the communication apparatus may include a chip, or may include a chip and another discrete device.

According to a fifth aspect, a communication apparatus is provided, and includes a processor and an interface circuit. The interface circuit is configured to: receive a computer program or instructions, and transmit the computer program or the instructions to the processor. The processor is configured to execute the computer program or the instructions, to enable the communication apparatus to perform the method according to any one of the foregoing aspects. The communication apparatus may be implemented by the communication apparatus in the first aspect, an apparatus including the communication apparatus, a module in the communication apparatus in the first aspect, for example, a chip, a chip system, or a circuit, or a logical node, a logical module, or software that can implement some or all functions of the communication apparatus. Alternatively, the communication apparatus may be implemented by the communication apparatus in the second aspect, an apparatus including the communication apparatus, a module in the communication apparatus in the second aspect, for example, a chip, a chip system, or a circuit, or a logical node, a logical module, or software that can implement some or all functions of the communication apparatus.

With reference to the fifth aspect, in a possible implementation, the communication apparatus is a chip or a chip system. Optionally, when the communication apparatus is the chip system, the communication apparatus may include a chip, or may include a chip and another discrete device.

According to a sixth aspect, a computer-readable storage medium is provided. The computer-readable storage medium stores instructions, and when the instructions are run on a computer, the computer is enabled to perform the method according to any one of the foregoing aspects.

According to a seventh aspect, a computer program product including instructions is provided. When the computer program product runs on a computer, the computer is enabled to perform the method according to any one of the foregoing aspects.

According to an eighth aspect, a communication system is provided. The communication system includes a communication apparatus configured to perform the method according to the first aspect and a communication apparatus configured to perform the method according to the second aspect.

For technical effects achieved by any one of the possible implementations of the third aspect to the eighth aspect, refer to technical effects achieved by any one of the first aspect, the second aspect, or different possible implementations of the first aspect or the second aspect. Details are not described herein again.

It may be understood that the solutions in the foregoing aspects may be combined on a premise that the solutions are not contradictory.

## BRIEF DESCRIPTION OF DRAWINGS

FIG. 1A is a diagram of service features upon arrival of an encoded haptic signal and an encoded video signal;
FIG. 1B is a diagram of a ring buffer;
FIG. 1C is a schematic flowchart of a method for determining, by a receiving end based on a quantity of unquantized information bits, a TBS of an actual TB and a quantity of output bit sequences included in a received TB;
FIG. 2 is a diagram of an architecture of a communication system according to this application;
FIG. 3 is a diagram of a hardware structure of a communication apparatus according to this application;
FIG. 4 is a schematic flowchart 1 of a data transmission method according to this application;
FIG. 5 is a diagram of a first concatenated bit sequence according to this application;
FIG. 6 is a schematic flowchart 2 of a data transmission method according to this application; and
FIG. 7 is a diagram of a structure of a communication apparatus according to this application.

## DESCRIPTION OF EMBODIMENTS

Before this application is described, related technical terms and related procedures in this application are explained and described. It may be understood that the explanations and descriptions are intended to facilitate understanding of this application, but should not be considered as a limitation on the protection scope claimed in this application.

1. Extended reality (extended reality, XR)

The XR may refer to various environments that merge reality and virtuality and that are created by using computing technologies and wearable devices, and human-machine interaction. The XR has advantages such as multiple views and strong interactivity, can provide brand-new experience for a user, and has great application value and commercial potential. The XR mainly includes virtual-reality interaction technologies, for example, virtual reality (virtual reality, VR), augmented reality (augmented reality, AR), and mixed reality (mixed reality, MR), and can be widely used in many fields such as entertainment, gaming, medical care, advertising, industry, online education, and engineering. A VR technology is mainly to render visual and audio scenarios to simulate sensory stimulation of vision and audio in a real world to the user as much as possible. The VR technology usually requires the user to wear an XR terminal (for example, a head-mounted device) to simulate a visual and/or auditory sense to the user. The VR technology may be further used to perform action tracking on the user, to update simulated visual and/or auditory content in time. An AR technology is mainly to provide visual and/or auditory additional information or artificially generated content in a real environment perceived by the user. The user may obtain the real environment directly (for example, without sensing, processing, and rendering) or indirectly (for example, the real environment is transferred through a sensor) and perform further enhancement processing. An MR technology is to insert some virtual elements into a physical scenario to provide the user with immersive experience in which the elements are a part of a real scenario. To improve experience of interaction between human and a virtual world, an XR service has strict requirements on bandwidth and a delay. The XR service mainly includes a video transmission service. The video transmission service may be used to generate and transmit a video signal (or video data).

2. Multi-modal service

As a new service, the multi-modal service is added with a haptic experience dimension based on the XR service, to implement remote touch and remote control, so as to implement remote sensing in a plurality of aspects such as vision, audition, haptics, and kinesthetics. The multi-modal service has great development space in industrial automation, healthcare, distance education, and other related fields, provides the user with comprehensive interactive experience, and has great application value and commercial potential. Generally, the multi-modal service includes a video transmission service, a haptic service, and the like. The haptic service may be used to generate and transmit a haptic signal (or haptic data).

3. Video signal and haptic signal

A source encoding and decoding principle of the video signal is different from a source encoding and decoding principle of the haptic signal. A traffic feature of transmission of data in the video signal in a network is different from a traffic feature of transmission of data in the haptic signal in the network. Therefore, a service feature of an encoded video signal is also different from a service feature of an encoded haptic signal.

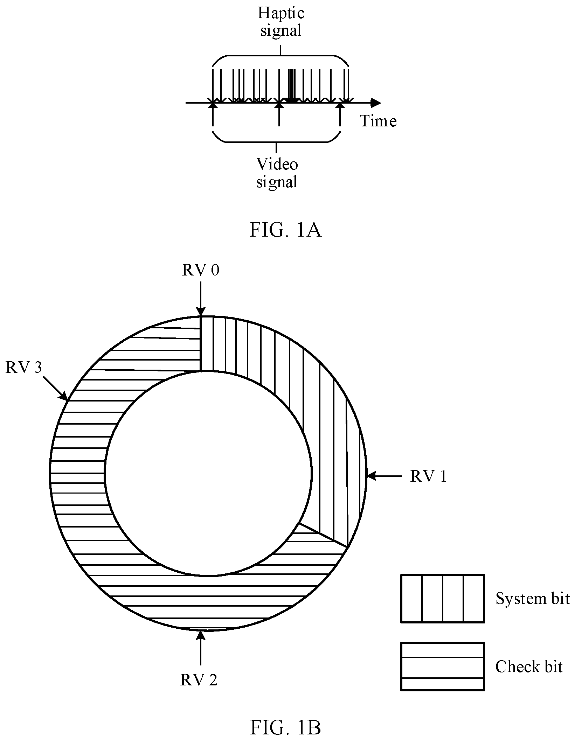

FIG. 1A is a diagram of service features upon arrival of an encoded haptic signal and an encoded video signal. In FIG. 1A, the encoded video signal arrives periodically, while the encoded haptic signal arrives randomly. A downlink scenario is used as an example. If a typical quantity of haptic sensors of a single user is 60 (for example, including 40 sensors on a haptic vest and 20 sensors on a pair of haptic gloves), from a perspective of wireless network transmission, haptic signals do not arrive periodically, and a transmission frequency of the haptic signals is high. The video signal usually arrives periodically based on a frame rate. For example, for a video with a frame rate of 60 frames per second (frame per second, FPS), each picture frame ideally arrives at an interval of 16.67 milliseconds. In addition, a size of a video frame is usually larger than that of a haptic data packet. For example, for a video with 30 Mbps @ 60 FPS, a size of a single video frame is 60 to 100 K bytes.

It may be understood that the haptic signal has different service features before and after source encoding. Specifically, before the source encoding, a signal generated by each haptic sensor is periodic. For example, 500 to 2000 packets are generated per second, and a size of each packet is 12 to 48 bytes. After the source encoding, a signal generated by each haptic sensor arrives randomly, a time interval between two arrivals complies with generalized Pareto distribution, and a size of a packet arriving each time remains unchanged. It may be understood that, although a size of an arriving packet for each haptic sensor remains unchanged after the source encoding, when a user uses a plurality of haptic sensors simultaneously, because signals of the sensors are generated independently, for different users, sizes of haptic data arriving at the network may be different.

In addition to different source encoding and decoding principles, the different traffic features of the transmission of the data in the network, and different service features of signals obtained through the source encoding, due to different perceptions of human bodies, the haptic signal and the video signal also have different transmission requirements on the network. For example, a reliability requirement of the video signal is 99%, and a delay requirement is 10 ms. A reliability requirement of the haptic signal is 99.999%, and a delay requirement is 5 ms. Therefore, different reliability assurances need to be used during transmission at a physical layer. For example, time division duplex (time division duplex, TDD) is configured as DDDDU (D represents a downlink slot, and U represents an uplink slot), and a subcarrier spacing is 30 kHz. Usually, there is only one retransmission opportunity within the delay requirement of 5 ms of the haptic signal. Therefore, an initial block error rate (initial block error rate, iBLER) at the physical layer may be set to 1%, and the transmission reliability requirement of 99.999% can be met after one retransmission and with combining gain accumulation. Usually, there may be two or three retransmission opportunities within the delay requirement of 10 ms of the video signal. Therefore, the iBLER at the physical layer may be set to 10%.

It may be understood that the iBLER at the physical layer affects a modulation and coding scheme (modulation and coding scheme, MCS) selected in a signal sending process. For example, under a same channel condition, a higher value of the iBLER at the physical layer indicates a higher value of a selected MCS index (index). The MCS index may correspond to one group of parameters, for example, a modulation order (modulation order), a target code rate, and spectral efficiency (spectral efficiency). Table 1 shows an MCS table. In Table 1, each MCS index corresponds to one group of a modulation order, a target code rate, and spectral efficiency. It may be understood that, in a communication system, a terminal and a RAN node store the MCS table. The RAN node may indicate one MCS index in the MCS table to the terminal, and the terminal may determine one group of a modulation order, a target code rate, and spectral efficiency, and perform channel encoding or decoding by using the group of parameters.

Table 1

| MCS index | Modulation order | Target code rate (x1024) | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |

(continued)

| MCS index | Modulation order | Target code rate (x1024) | Spectral efficiency |
|-----------|------------------|--------------------------|---------------------|
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved (reserved) | |
| 30 | 4 | Reserved | |
| 31 | 6 | Reserved | |

4. Channel encoding and decoding procedure

The channel encoding and decoding procedure may include the following steps.

S4.1: A transmitting end obtains to-be-sent information (for example, service data), and divides the to-be-sent information into blocks, to obtain at least one unencoded code block (code block).

It may be understood that the transmitting end in this application is an apparatus for sending the to-be-sent information, for example, a terminal, a RAN node, a module (for example, a chip, a chip system, or a circuit) in the terminal/RAN node, or a logical node, a logical module, or software that can implement all or some functions of the terminal/RAN node.

For example, a low-density parity-check (low-density parity-check, LDPC) encoder used in new radio (new radio, NR) is used as an example. The encoder has a requirement on a length of the unencoded code block. For example, a maximum unencoded code block length supported by a base graph (base graph, BG) 1 related to channel encoding is 8448 bits, and a maximum unencoded code block length supported by a BG 2 related to the channel encoding is 3840 bits. Therefore, when a length of the to-be-sent information is greater than or equal to the maximum length (for example, the 8448 bits or the 3840 bits) supported by the encoder, the transmitting end divides the to-be-sent information into blocks and adds a cyclic redundancy check (cyclic redundancy check, CRC) code, to obtain a plurality of unencoded code blocks. Two BG types are set to effectively process different information payload lengths and encoding rates.

It may be understood that when the length of the to-be-sent information is less than the maximum length supported by the encoder, the transmitting end does not divide the to-be-sent information into blocks, and the to-be-sent information is included in one unencoded code block.

S4.2: The transmitting end performs channel encoding on the at least one unencoded code block, to obtain at least one code block (coded block (which may also be referred to as a code block)).

S4.3: The transmitting end performs rate matching on the at least one code block, to obtain at least one output bit sequence after rate matching (output bit sequence after rate matching).

In a possible implementation, the transmitting end performs rate matching on each of the at least one code block, to obtain an output bit sequence after rate matching of each code block.

For ease of description, in this application, the "output bit sequence after rate matching" is referred to as an "output bit sequence" for short.

It may be understood that a process in which the transmitting end performs rate matching on each code block is similar. The following uses a code block 0 as an example to describe a specific process in which the transmitting end performs rate matching on the code block 0 to obtain an output bit sequence of the code block 0.

It may be understood that the code block 0 includes a system bit sequence and a check bit sequence. In this application, a bit sequence includes two or more bits. For example, the system bit sequence includes two or more system bits, and the check bit sequence includes two or more check bits. The system bits are bits in the to-be-sent information, and the check bits are bits obtained through the channel encoding.

First, the transmitting end punctures the system bits in the code block 0, and writes, into a ring buffer, remaining bits in the code block 0 that are after the puncturing. A quantity of punctured bits is related to a size of the code block 0 that is before the puncturing. The ring buffer may be shown in FIG. 1B. To be specific, starting from a 1st bit in the remaining bits (that is, the remaining bits after the puncturing) in the code block 0, the transmitting end sequentially writes the remaining bits in the code block 0 into the ring buffer shown in FIG. 1B. Then, the transmitting end may determine the output bit sequence of the code block 0 in the ring buffer. For example, the transmitting end determines a start location of the output bit sequence of the code block 0 in the ring buffer and a length of the output bit sequence of the code block 0. In this way, the transmitting end can obtain the output bit sequence of the code block 0.

The start location of the output bit sequence of the code block 0 in the ring buffer may be determined by using a redundancy version (redundancy version, RV). For example, different RVs may correspond to different start locations in the ring buffer. FIG. 1B shows four RVs: an RV 0, an RV 1, an RV 2, and an RV 3. Locations of the four RVs in the ring buffer may be pre-specified. For example, during initial transmission, the transmitting end uses the RV 0 for sending. If retransmission is needed, sending may be performed in a sequence of the RV 2, the RV 3, and the RV 1. At a receiving end, a plurality of RVs may be combined in a "soft combining" manner for decoding, to increase decoding accuracy.

The following describes a specific process in which the transmitting end determines the length of the output bit sequence of the code block 0.

First, the transmitting end obtains an MCS used by a transport block (transport block, TB) in which the code block 0 is located and a size of the TB, namely, a transport block size (transport block size, TBS), and determines a length of an output bit sequence of each code block (for example, the code block 0) in the TB based on the foregoing parameters. The MCS mainly includes two parameters: a modulation order (denoted as $Q$) and a target code rate (denoted as $R$).

For example, the length of the output bit sequence of the code block 0 satisfies the following formula:

$$E_r = Q \times V \times Int[\frac{TBS}{Q \times V \times C}] \quad \text{(Formula 1)}.$$

$Int[]$ is a rounding function, and may be rounding up or rounding down. $V$ is a quantity of layers for spatial multiplexing in a multi-antenna case. C is a quantity of the at least one unencoded code block.

It may be understood that, if the transmitting end is the RAN node, a scheduler of the transmitting end may determine, based on a data amount of a local data buffer and a user channel condition, the MCS used by the TB in which the code block 0 is located, and obtain the TBS with reference to a quantity (denoted as $N_{RE}$) of resource elements (resource elements, REs) available for an air interface and the quantity (denoted as $V$) of layers for the spatial multiplexing in the multi-antenna case, to determine the length of the output bit sequence of each code block in the TB.

It may be understood that, if the transmitting end is the terminal, after obtaining the modulation order, the target code rate, the quantity of REs available for the air interface, and the quantity of layers for the spatial multiplexing in the multi-antenna case, the RAN node may indicate these parameters to the terminal. For example, the RAN node indicates these parameters to the terminal by using downlink control information (downlink control information, DCI), so that the terminal determines the length of the output bit sequence of each code block in the TB based on these parameters.

It may be understood that the transmitting end may obtain the at least one output bit sequence by performing rate matching on each of the at least one code block. Then, the transmitting end may obtain the TB based on the at least one output bit sequence. For example, if the transmitting end does not divide the to-be-sent information into blocks in S4.1, the transmitting end may obtain one output bit sequence in S4.3, and the transmitting end determines the output bit sequence as the TB. If the transmitting end divides the to-be-sent information into blocks in S4.1, the transmitting end may obtain a plurality of output bit sequences in S4.3, and the transmitting end concatenates the plurality of output bit sequences to obtain the TB.

S4.4: The transmitting end sends the TB to the receiving end. Correspondingly, the receiving end receives the TB.

It may be understood that the receiving end in this application is an apparatus for receiving the to-be-sent information. For example, if the transmitting end is the RAN node, the module in the RAN node, the logical node, the logical module, or the software that can implement the all or some functions of the RAN node, or the like, the receiving end may be the terminal, the module (for example, the chip, the chip system, or the circuit) in the terminal, the logical node, the logical module, or the software that can implement the all or some functions of the terminal, or the like. If the transmitting end is the terminal, the module in the terminal, the logical node, the logical module, or the software that can implement the all or some functions of the terminal, or the like, the receiving end may be the RAN node, the module (for example, the chip, the chip system, or the circuit) in the RAN node, the logical node, the logical module, or the software that can implement the all or some functions of the RAN node, or the like.

S4.5: The receiving end determines a TBS (that is, a TBS of a TB before the puncturing) of an actual TB, a quantity of output bit sequences included in the received TB, and a length of each output bit sequence.

It may be understood that a method for determining the length of the output bit sequence by the receiving end is similar to a method for determining the length of the output bit sequence by the transmitting end. Therefore, refer to corresponding descriptions in S4.3. Details are not described herein again.

The following describes a specific process in which the receiving end determines the TBS of the actual TB and the quantity of output bit sequences included in the received TB.

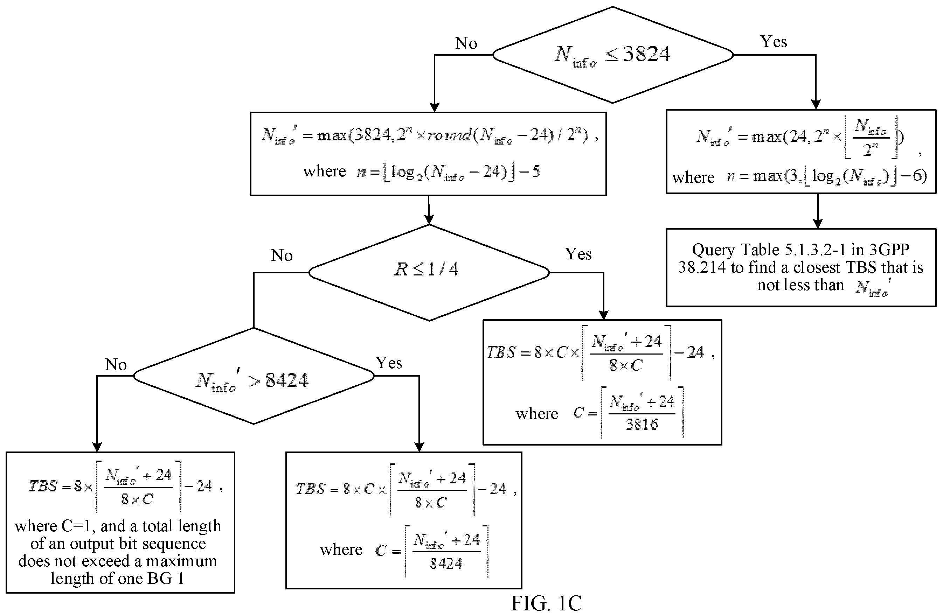

First, the receiving end may determine a quantity of unquantized information bits, that is, a size (denoted as $N_{inf\,o}$) of the to-be-sent information, based on the quantity of REs available for the air interface, the modulation order, the target code rate, and the quantity of layers for the spatial multiplexing in the multi-antenna case. For example, the quantity of unquantized information bits satisfies the following formula: $N_{inf\,o} = N_{RE} \times Q \times V \times R$. Then, the receiving end may determine, based on the quantity of unquantized information bits, the TBS (denoted as *TBS'*) of the actual TB and the quantity (denoted as *C*) of output bit sequences included in the received TB. A specific calculation process may be shown in FIG. 1C.

S4.6: The receiving end performs channel decoding based on the TBS of the actual TB, the quantity of output bit sequences included in the received TB, and the length of each output bit sequence.

5. OLLA mechanism

It may be understood that an objective of link adaptation is to better match an MCS index selected by the RAN node with actual channel quality. For example, the RAN node may periodically send a channel state information reference signal (channel state information reference signal, CSI-RS) to the terminal. The terminal may calculate the channel quality by measuring the CSI-RS, evaluate the channel quality by using a channel quality indicator (channel quality indicator, CQI), and feed back the indicator to the RAN node, so that the RAN node determines, based on the CQI and an OLLA value (which may also be referred to as an OLLA parameter), an MCS index used for next TB transmission. In this way, the MCS index selected by the RAN node matches the actual channel quality.

Table 2 shows a CQI table. In Table 2, each CQI index, except 0, corresponds to one group of a modulation scheme (modulation), a code rate (code rate), and efficiency (efficiency). The modulation scheme includes quadrature phase shift keying (quadrature phase shift keying, QPSK), 16 quadrature amplitude modulation (quadrature amplitude modulation, QAM), and 64QAM.

Table 2

| CQI index | Modulation scheme | Code rate (x1024) | Efficiency |
|---|---|---|---|
| 0 | Out of range (out of range) | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |

(continued)

| CQI index | Modulation scheme | Code rate (x1024) | Efficiency |
|---|---|---|---|
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

It may be understood that during system initialization, an initial value is set for the OLLA value. Then, the OLLA value is increased or decreased based on an acknowledgment (acknowledgment, ACK) message or a negative acknowledgment (negative acknowledgment, NACK) message fed back by the terminal after each time of TB transmission. For example, when the RAN node receives the ACK message fed back by the terminal, the RAN node may increase the OLLA value, and correspondingly, the RAN node selects a higher MCS index. When the RAN node receives the NACK message fed back by the terminal, the RAN node may decrease the OLLA value, and correspondingly, the RAN node selects a lower MCS index. In addition, the OLLA value is related to an iBLER.

For example, the OLLA value may satisfy the following formula:

$$P_{OLLA} = \begin{cases} Step, & ACK \\ -Step \times \dfrac{1-iBLER}{iBLER}, & NACK \end{cases}$$

$P_{OLLA}$ represents the OLLA value, and Step represents a step value. In other words, if the terminal feeds back the ACK message, the OLLA value is Step; or if the terminal sends the NACK message, the OLLA value is $-Step \times \dfrac{1-iBLER}{iBLER}$.

The following describes implementations of this application in detail with reference to the accompanying drawings.

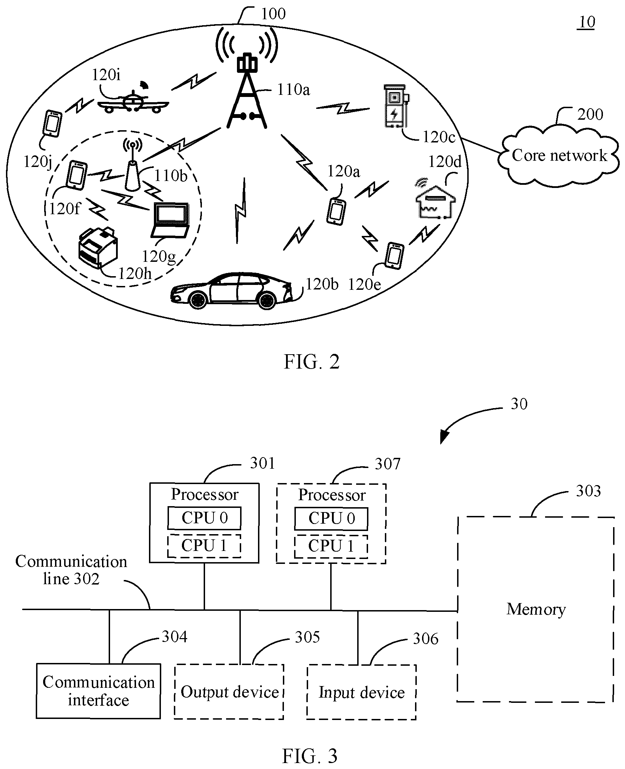

A method provided in this application may be used in various communication systems. The following uses a communication system 10 shown in FIG. 2 as an example to describe the method provided in this application. FIG. 2 is merely a diagram, and does not constitute a limitation on an applicable scenario of the technical solutions provided in this application.

FIG. 2 is a possible and non-limitative system diagram. As shown in FIG. 2, the communication system 10 includes a radio access network (radio access network, RAN) 100 and a core network (core network, CN) 200. The RAN 100 includes at least one RAN node (for example, 110a and 110b in FIG. 2, which are collectively referred to as 110) and at least one terminal (for example, 120a to 120j in FIG. 2, which are collectively referred to as 120). The RAN 100 may further include another RAN node, for example, a wireless relay device and/or a wireless backhaul device (not shown in FIG. 2). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a 3GPP-related cellular system, for example, a 4G or 5G mobile communication system, or a future-oriented evolved system (for example, a 6G mobile communication system). Alternatively, the RAN 100 may be an open access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

The RAN node 110 may also be sometimes referred to as an access network device, a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, a network element 120i in FIG. 2 may be a helicopter or an uncrewed aerial vehicle, and may be configured as a mobile base station. For those terminals 120j that access the RAN 100 through the network element 120i, the network element 120i is a base station. However, for the base station 110a, the network element 120i is a terminal. Both the RAN node 110 and the terminal 120 are sometimes referred to as communication apparatuses. For example, network elements 110a and 110b in FIG. 2 may be understood as communication apparatuses having a base station function, and network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 2), a micro base station or an indoor station (for example, 110b in FIG. 2), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may alternatively be implemented by using a software function running on hardware, or may be implemented by using a virtualization function instantiated on a platform (for example, a cloud platform). The RAN node in this application may alternatively be a logical node, a logical module, or software that can implement all or some functions of the RAN node.

In another possible scenario, the plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The terminal may alternatively be a VR terminal, an AR terminal, or a mixed reality (mixed reality, MR) terminal. The VR terminal, the AR terminal, and the MR terminal may all be referred to as extended reality (extended reality) terminals. The XR terminal may be, for example, a head-mounted device (for example, a helmet, a head-mounted display (head-mounted display, HMD), or glasses), may be an all-in-one machine, or may be a television, a display, a car, a vehicle-mounted device, a tablet, or a smart screen. The XR terminal may access a network in a wireless or wired manner, for example, access the network through a Wi-Fi or 5G system. The XR terminal can present XR data to a user, and the user can experience diversified XR services by wearing or using the XR terminal.

The communication system 10 shown in FIG. 2 is merely used as an example, but is not intended to limit the technical solutions of this application. A person skilled in the art should understand that, in a specific implementation process, the communication system 10 may further include another device, and a quantity of RAN nodes and a quantity of terminals may alternatively be determined based on a specific need. This is not limited.

Optionally, each network element or device (for example, the RAN node or the terminal) in FIG. 2 in this application may also be referred to as a communication apparatus, and may be a general-purpose device or a dedicated device. This is not specifically limited in this application.

Optionally, related functions of each network element or device (for example, the RAN node or the terminal) in FIG. 2 in this application may be implemented by one device, may be jointly implemented by a plurality of devices, or may be implemented by one or more functional modules in one device. This is not specifically limited in this application. It may be understood that the foregoing function may be a network element in a hardware device, a software function running on dedicated hardware, a combination of hardware and software, or a virtualization function instantiated on a platform (for example, a cloud platform).

During specific implementation, each network element or device (for example, the RAN node or the terminal) in FIG. 2 in this application may use a composition structure shown in FIG. 3, or include components shown in FIG. 3. FIG. 3 is a diagram of a hardware structure of a communication apparatus applicable to this application. The communication apparatus 30 includes at least one processor 301 and at least one communication interface 304, and is configured to implement the method provided in this application. The communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transferring information between the foregoing components, for example, a bus.

The communication interface 304 is configured to communicate with another device or a communication network. The communication interface 304 may be any apparatus like a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of an instruction or a data structure and that can be accessed by a computer, but is not limited thereto. The memory may exist independently, and is coupled to the processor 301 through the communication line 302. Alternatively, the memory 303 may be integrated with the processor 301. The memory provided in this application may be usually non-volatile.

The memory 303 is configured to store computer-executable instructions for executing the solutions provided in this application, and the processor 301 controls execution. The processor 301 is configured to execute the computer-executable instructions stored in the memory 303, to implement the method provided in this application. Alternatively, optionally, in this application, the processor 301 may perform a processing-related function in the method provided in the following embodiment of this application, and the communication interface 304 is responsible for communicating with the another device or the communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive a user input in a plurality of manners. For example, the input device 306 may be a mouse, a keyboard, a touchscreen device, or a sensor device.

It may be understood that the composition structure shown in FIG. 3 does not constitute a limitation on the communication apparatus. In addition to the components shown in FIG. 3, the communication apparatus may include more or fewer components than those shown in the figure, or combine some components, or have a different component arrangement.

The following describes the method provided in this application with reference to the accompanying drawings. Network elements in the following embodiments may have the components shown in FIG. 3, and details are not described again.

It may be understood that names of messages between the network elements, names of parameters in the messages, or the like in the following embodiments of this application are merely examples, and there may be other names during specific implementation. This is not specifically limited in this application.

It may be understood that, in this application, "/" may represent an "or" relationship between associated objects. For example, A/B may represent A or B. "And/or" may be used to describe three relationships existing between the associated objects. For example, A and/or B may represent the following three cases: Only A exists, both A and B exist, and only B exists, where A and B may be singular or plural. In addition, an expression similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements: A, B, and C as an example to describe an optional item of the project. When there are more elements in the expression, a meaning of the expression may be obtained according to the foregoing rules.

For ease of describing the technical solutions of this application, in this application, terms such as "first" and "second" may be used to distinguish between technical features with same or similar functions. The terms such as "first" and "second" do not limit a quantity and an execution sequence, and the terms such as "first" and "second" do not indicate a definite difference. In this application, a word like "example" or "for example" is used to represent giving an example, an illustration, or a description. Any embodiment or design scheme described as "example" or "for example" should not be explained as being more preferred or having more advantages than another embodiment or design scheme. The word like "example" or "for example" is used to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the processes do not mean execution sequences in embodiments of this application. The execution sequences of the processes should be determined based on functions and internal logic of the processes, and should not constitute any limitation on implementation processes of embodiments of this application.

It may be understood that, in this application, "when" and "if" mean that corresponding processing is performed in an objective situation, are not intended to limit time, do not require a necessary determining action during implementation, and do not mean any other limitation.

It may be understood that, in some scenarios, some optional features in this application may be independently implemented without depending on another feature, for example, a solution on which the optional features are currently based, to resolve a corresponding technical problem and achieve a corresponding effect. Alternatively, in some scenarios, the optional features may be combined with another feature based on requirements. Correspondingly, the apparatus provided in this application may also correspondingly implement these features or functions. Details are not described herein.

It may be understood that, a same step or steps or technical features that have a same function in this application may be mutually referenced in different embodiments.

It may be understood that, in this application, the RAN node and/or the terminal may perform some or all steps in embodiments of this application. These steps are merely examples. In embodiments of this application, other steps or variations of various steps may be further performed. In addition, the steps may be performed in a sequence different from a sequence presented in embodiments of this application, and not all the steps in embodiments of this application may be necessarily performed.

It may be understood that, in the method provided below in this application, the method is illustrated by using an example in which the RAN node and the terminal are used as execution bodies of interaction illustration. However, the execution bodies of the interaction illustration are not limited in this application. For example, the RAN node in the method provided in this application may alternatively be a chip, a chip system, or a processor that supports the RAN node in implementing the method, or may be a logical node, a logical module, or software that can implement all or some functions of the RAN node. The terminal in the method provided in this application may alternatively be a chip, a chip system, or a processor that supports the terminal in implementing the method, or may be a logical node, a logical module, or software that can implement all or some functions of the terminal.

In this application, "sending information/a bit sequence to the terminal" may be understood as that a destination end of the information/bit sequence is the terminal, and may include directly or indirectly sending the bit sequence to the terminal. "Receiving information/a bit sequence from the terminal" may be understood as that a source end of the information is the terminal, and may include directly or indirectly receiving the information/bit sequence from the terminal. Necessary processing, for example, a format change, may be performed on the information/bit sequence between the destination end and the source end at which the information/bit sequence is sent, but the destination end may understand valid information from the source end. A similar expression in this application may be understood similarly, and details are not described herein again.

In this application, "sending information/a bit sequence to the RAN node" may be understood as that a destination end of the information/bit sequence is the RAN node, and may include directly or indirectly sending the bit sequence to the RAN node. "Receiving a bit sequence from the RAN node" may be understood as that a source end of the information/bit sequence is the RAN node, and may include directly or indirectly receiving the information/bit sequence. Necessary processing, for example, a format change, may be performed on the information/bit sequence between the destination end and the source end at which the information/bit sequence is sent, but the destination end may understand valid information from the source end. A similar expression in this application may be understood similarly, and details are not described again.

First, the data transmission method provided in this application is described by using an example in which the RAN node is a transmitting end of to-be-sent information and the terminal is a receiving end of the to-be-sent information. The RAN node in the following embodiments may be the RAN node 110 in FIG. 2, and the terminal in the following embodiments may be the terminal 120 in FIG. 2.

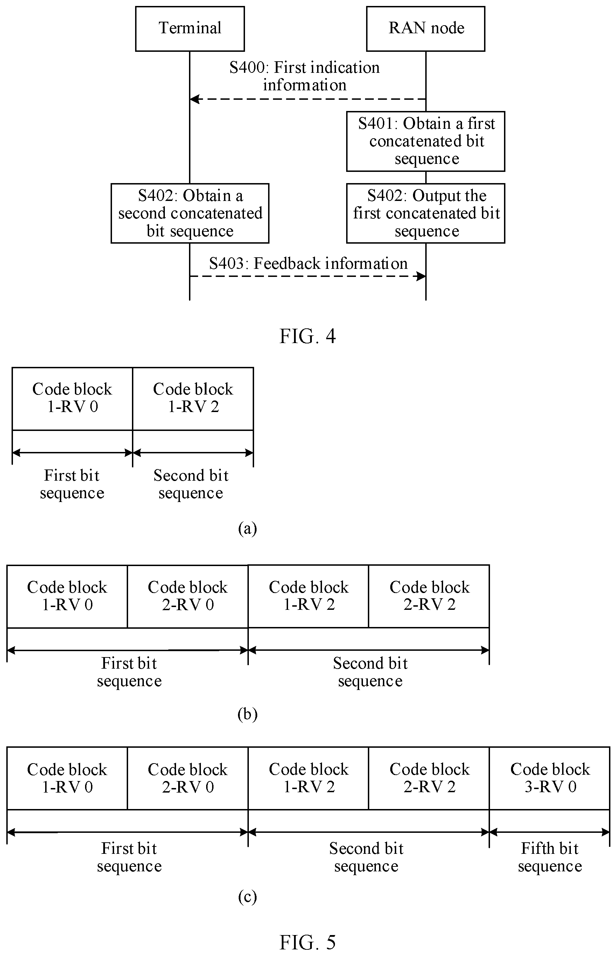

FIG. 4 shows a data transmission method according to this application. The method may include the following steps.

S401: A RAN node obtains a first concatenated bit sequence.

In this application, the first concatenated bit sequence includes a first bit sequence and a second bit sequence. The first bit sequence is bit sequences of first redundancy versions of M code blocks, the second bit sequence is bit sequences of second redundancy versions of the M code blocks, and M is a positive integer. It may be understood that the first redundancy version is different from the second redundancy version. For example, an index of the first redundancy version is 0, and an index of the second redundancy version is 1, 2, or 3. It should be understood that the index of the first redundancy version and the index of the second redundancy version may alternatively be other values. This is not limited.

In an example, the first concatenated bit sequence is a bit sequence in a TB.

In a possible design, the first bit sequence is concatenated with the second bit sequence, and the first bit sequence is located before the second bit sequence. In other words, after obtaining the first bit sequence and the second bit sequence, the RAN node connects the second bit sequence after the first bit sequence, to obtain the first concatenated bit sequence.

Optionally, the first bit sequence is located at the forefront of the first concatenated bit sequence.

In an example, if M is equal to 1, the index of the first redundancy version is 0, and the index of the second redundancy version is 2, the first concatenated bit sequence may be shown in (a) in FIG. 5. In (a) in FIG. 5, the first concatenated bit sequence includes the first bit sequence and the second bit sequence. The first bit sequence is represented as a code block 1-RV 0, that is, a bit sequence of an RV 0 of a code block 1, and the second bit sequence is represented as a code block 1-RV 2, that is, a bit sequence of an RV 2 of the code block 1.

In a possible design, if M is greater than 1, the bit sequences in the first bit sequence are concatenated in descending or ascending order of index values of the M code blocks.

In a possible design, if M is greater than 1, the bit sequences in the second bit sequence are concatenated in descending or ascending order of the index values of the M code blocks.

In an example, if M is equal to 2, the index of the first redundancy version is 0, and the index of the second redundancy version is 2, the first concatenated bit sequence may be shown in (b) in FIG. 5. In (b) in FIG. 5, the first concatenated bit sequence includes the first bit sequence and the second bit sequence. The first bit sequence includes a bit sequence (represented as a code block 1-RV 0 in (b) in FIG. 5) of an RV 0 of a code block 1 and a bit sequence (represented as a code block 2-RV 0 in (b) in FIG. 5) of an RV 0 of a code block 2. The second bit sequence includes a bit sequence (represented as a code block 1-RV 2 in (b) in FIG. 5) of an RV 2 of the code block 1 and a bit sequence (represented as a code block 2-RV 2 in (b) of FIG. 5) of an RV 2 of the code block 2. In (b) in FIG. 5, the code block 1-RV 0 and the code block 2-RV 0 in the first bit sequence are concatenated in ascending order of index values of the code block 1 and the code block 2. The code block 1-RV 2 and the code block 2-RV 2 in the second bit sequence are also concatenated in ascending order of the index values of the code block 1 and the code block 2.

It may be understood that FIG. 5 is merely an example of the first concatenated bit sequence. During specific application, the first concatenated bit sequence may alternatively be in another form, and/or the first concatenated bit sequence may further include a bit sequence other than the first bit sequence and the second bit sequence. This is not limited.

S402: The RAN node outputs the first concatenated bit sequence. Correspondingly, a terminal obtains a second concatenated bit sequence.

That the RAN node outputs the first concatenated bit sequence may be understood as that the RAN node sends the first concatenated bit sequence to another apparatus. For example, the RAN node sends the first concatenated bit sequence to the terminal. It may be understood that before sending the first concatenated bit sequence to the terminal, the RAN node may perform necessary processing (for example, modulation and resource mapping) on the first concatenated bit sequence.

That the RAN node outputs the first concatenated bit sequence may alternatively be understood as that a module of the RAN node outputs the first concatenated bit sequence to another module of the RAN node. For example, a module that is responsible for rate matching or code block concatenation and that is of the RAN node outputs the first concatenated bit sequence to a module (for example, a module responsible for modulation) that subsequently processes the first concatenated bit sequence. It should be understood that after obtaining the first concatenated bit sequence, the another module of the RAN node may perform necessary processing (for example, modulation) on the first concatenated bit sequence.

It may be understood that the second concatenated bit sequence is a bit sequence that corresponds to the first concatenated bit sequence and that is received by the terminal after transmission of the first concatenated bit sequence is performed through a radio channel. Therefore, the second concatenated bit sequence and the first concatenated bit sequence may be the same or different.

For example, if the terminal receives the first concatenated bit sequence and correctly demodulates the first concatenated bit sequence, the second concatenated bit sequence is the same as the first concatenated bit sequence. If the terminal receives the first concatenated bit sequence but incorrectly demodulates the first concatenated bit sequence, the second concatenated bit sequence is different from the first concatenated bit sequence.

In this application, the second concatenated bit sequence includes a third bit sequence and a fourth bit sequence. The third bit sequence corresponds to the first redundancy versions of the M code blocks, and the fourth bit sequence corresponds to the second redundancy versions of the M code blocks.

Optionally, the third bit sequence is concatenated with the fourth bit sequence, and the third bit sequence is located before the fourth bit sequence.

Optionally, the third bit sequence is located at the forefront of the second concatenated bit sequence.

It may be understood that if the terminal correctly demodulates the first bit sequence, the third bit sequence is the same as the first bit sequence. If an error occurs when the terminal demodulates the first bit sequence, the third bit sequence is a bit sequence actually obtained by the terminal. Similarly, if the terminal correctly demodulates the second bit sequence, the fourth bit sequence is the same as the second bit sequence. If an error occurs when the terminal demodulates the second bit sequence, the fourth bit sequence is a bit sequence actually obtained by the terminal.

In this application, that the terminal obtains the second concatenated bit sequence may be understood as that the terminal receives the second concatenated bit sequence from another apparatus. For example, the terminal receives the second concatenated bit sequence from the RAN node. Alternatively, that the terminal obtains the second concatenated bit sequence may be understood as that a module of the terminal obtains the second concatenated bit sequence from another module of the terminal. For example, a module that is responsible for de-rate matching or de-code block concatenation and that is of the terminal may obtain the second concatenated bit sequence from a demodulation module.

It may be understood that, after S402, the terminal may decode the third bit sequence, and perform joint decoding (for example, perform soft combining or incremental redundancy) on the third bit sequence and the fourth bit sequence. In this way, the RAN node may assist, based on a decoding status of the terminal, in implementing link adaptation of another service. For a specific process in which the terminal performs decoding and a specific process in which the RAN node performs link adaptation, refer to the foregoing descriptions in the related procedure in this application. Details are not described herein again.

According to the method shown in FIG. 4, the RAN node may obtain the first concatenated bit sequence, and output the first concatenated bit sequence, so that the terminal can decode the first concatenated bit sequence. During the decoding, the terminal not only decodes the first bit sequence in the first concatenated bit sequence, but also performs joint decoding on the first bit sequence and the second bit sequence in the first concatenated bit sequence. In this way, the RAN node may perform link adaptation based on a decoding status of the first bit sequence, to assist in updating an OLLA parameter of another service. In addition, the second bit sequence includes a bit sequence whose RV is different from that of the bit sequence included in the first bit sequence. Therefore, transmission reliability of data in the first bit sequence can be ensured by using the second bit sequence.

Optionally, in a possible implementation of the method shown in FIG. 4, S401 may include the following steps.

S4011: The RAN node obtains data of a first service (for example, a haptic service), and divides the data of the first service into blocks, to obtain N unencoded code blocks. N is greater than or equal to M. For a specific process of S4011, refer to corresponding descriptions in S4.1. Details are not described herein again.

S4012: The RAN node performs channel encoding on each of the N unencoded code blocks based on a first target code rate, to obtain N code blocks.

The first target code rate is a target code rate associated with a second service (for example, a video transmission service). The first target code rate is different from a second target code rate associated with the first service.

It may be understood that the RAN node performs encoding based on the first target code rate to assist in updating an OLLA parameter of the second service by using the data of the first service. If the first service is the haptic service, and the second service is the video transmission service, a transmission reliability requirement of the first service is higher than a transmission reliability requirement of the second service. Usually, a service having a higher transmission reliability requirement is associated with a lower target code rate, and a service having a lower transmission reliability requirement is associated with a higher target code rate. Therefore, the first target code rate is greater than the second target code rate. Therefore, if the RAN node performs encoding based on the first target code rate, transmission reliability of the first service is reduced. To improve the transmission reliability of the first service, the RAN node may send more redundancy versions of one code block to the terminal.

S4013: The RAN node performs rate matching on each of the N code blocks to obtain N+M output bit sequences.

For a specific process of the rate matching, refer to corresponding descriptions in S4.3. However, there are the following two differences:

(1) In S4013, the RAN node not only obtains a bit sequence of a first redundancy version of each of the N code blocks, but also obtains the bit sequences of the second redundancy versions of the M code blocks. The M code blocks are all or some of the N code blocks. In other words, the RAN node determines the M code blocks in the N code blocks. For the M code blocks, the RAN node needs to obtain both the bit sequences of the first redundancy versions of the M code blocks and the bit sequences of the second redundancy versions of the M code blocks. For a code block other than the M code blocks in the N code blocks, the RAN node only needs to obtain a bit sequence of a first redundancy version of the code block.

It may be understood that the RAN node may obtain bit sequences of first redundancy versions of the N code blocks and the bit sequences of the second redundancy versions of the M code blocks by using S4013.

Example 1: If both N and M are equal to 1, the index of the first redundancy version is 0, and the index of the second redundancy version is 2, the RAN node obtains the bit sequence of the RV 0 of the code block 1, and the RAN node further obtains the bit sequence of the RV 2 of the code block 1.

Example 2: If both N and M are equal to 2, the index of the first redundancy version is 0, and the index of the second redundancy version is 2, the RAN node obtains the bit sequence of the RV 0 of the code block 1 and the bit sequence of the RV 0 of the code block 2, and the RAN node further obtains the bit sequence of the RV 2 of the code block 1 and the bit sequence of the RV 2 of the code block 2.

Further, if the M code blocks are some of the N code blocks, the bit sequences of the first redundancy versions of the N code blocks may be understood as including the bit sequences of the first redundancy versions of the M code blocks and bit sequences of first redundancy versions of P code blocks. The P code blocks are code blocks other than the M code blocks in the N code blocks.

Example 3: If N is equal to 3 (the N code blocks include the code block 1, the code block 2, and a code block 3), M is equal to 2 (the M code blocks include the code block 1 and the code block 2), P is equal to 1 (the P code blocks include the code block 3), the index of the first redundancy version is 0, and the index of the second redundancy version is 2, the RAN node obtains the bit sequence of the RV 0 of the code block 1, the bit sequence of the RV 0 of the code block 2, and a bit sequence of an RV 0 of the code block 3, and the RAN node further obtains the bit sequence of the RV 2 of the code block 1 and the bit sequence of the RV 2 of the code block 2.

It may be understood that a bit sequence of a first redundancy version of a code block or a bit sequence of a second redundancy version of a code block may be understood as an output bit sequence of the code block. Therefore, that the RAN node obtains the bit sequences of the first redundancy versions of the N code blocks is equivalent to obtaining N output bit sequences, and that the RAN node obtains the bit sequences of the second redundancy versions of the M code blocks is equivalent to obtaining M output bit sequences. Therefore, the RAN node may obtain the N+M output bit sequences by using S4013.

(2) Calculation manners of a length of the output bit sequence are different.

In S4013, a length of a bit sequence of a first redundancy version of one of the M code blocks or a length of a bit sequence of a second redundancy version of one of the M code blocks is related to M.

In a possible design, the length of the bit sequence of the first redundancy version of the one of the M code blocks or the length of the bit sequence of the second redundancy version of the one of the M code blocks satisfies the following formula: $E_r' = Q \times V \times Int[\dfrac{TBS}{Q \times V \times C'}]$ . $E_r'$ represents the length of the bit sequence of the first redundancy version of the one of the M code blocks or the length of the bit sequence of the second redundancy version of the one of the M code blocks, $Q$ represents a modulation order, $V$ represents a quantity of layers for spatial multiplexing in a multi-antenna case, and $C' = N + M$.

S4014: The RAN node concatenates the N+M output bit sequences to obtain the first concatenated bit sequence.

In a possible implementation, the RAN node concatenates the N+M output bit sequences according to a specific rule, to obtain the first concatenated bit sequence.

It may be understood that, if M is equal to N, the first concatenated bit sequence includes the first bit sequence and the second bit sequence. The first bit sequence includes the bit sequences of the first redundancy versions of the N code blocks, and the second bit sequence includes the bit sequences of the second redundancy versions of the M code blocks.

In a possible design, if both M and N are equal to 1, the RAN node concatenates the first bit sequence and the second bit sequence to obtain the first concatenated bit sequence.

For example, for the foregoing example 1, the RAN node concatenates the bit sequence of the RV 0 of the code block 1 and the bit sequence of the RV 2 of the code block 1, to obtain the first concatenated bit sequence shown in (a) in FIG. 5.

In another possible design, if both M and N are greater than 1, the RAN node concatenates the bit sequences of the first redundancy versions of the N code blocks according to a specific rule (for example, in descending or ascending order of indexes of the N code blocks) as the first bit sequence, concatenates the bit sequences of the second redundancy versions of the M code blocks according to a specific rule (for example, in descending or ascending order of indexes of the M code blocks) as the second bit sequence, and concatenates the first bit sequence and the second bit sequence as the first concatenated bit sequence.

For example, for the foregoing example 2, the RAN node concatenates the bit sequence of the RV 0 of the code block 1 and the bit sequence of the RV 0 of the code block 2 as the first bit sequence, concatenates the bit sequence of the RV 2 of the code block 1 and the bit sequence of the RV 2 of the code block 2 as the second bit sequence, and concatenates the first bit sequence and the second bit sequence, to obtain the first concatenated bit sequence shown in (b) in FIG. 5.

It may be understood that, if N is greater than M, the first concatenated bit sequence further includes a fifth bit sequence in addition to the first bit sequence and the second bit sequence. The first bit sequence includes the bit sequences of the first redundancy versions of the M code blocks, the second bit sequence includes the bit sequences of the second redundancy versions of the M code blocks, and the fifth bit sequence includes the bit sequences of the first redundancy versions of the P code blocks.

In a possible design, if both M and P are equal to 1, the RAN node concatenates the first bit sequence, the second bit sequence, and the fifth bit sequence, to obtain the first concatenated bit sequence.

In another possible design, if M is greater than 1, and P is equal to 1, the RAN node concatenates the bit sequences of the first redundancy versions of the M code blocks according to a specific rule (for example, in descending or ascending order of indexes of the M code blocks) as the first bit sequence, concatenates the bit sequences of the second redundancy versions of the M code blocks according to a specific rule (for example, in descending or ascending order of the indexes of the M code blocks) as the second bit sequence, and concatenates the first bit sequence, the second bit sequence, and the fifth bit sequence as the first concatenated bit sequence.

In another possible design, if M is equal to 1, and P is greater than 1, the RAN node concatenates the bit sequences of the first redundancy versions of the P code blocks according to a specific rule (for example, in descending or ascending order of indexes of the P code blocks) as the fifth bit sequence, and concatenates the first bit sequence, the second bit sequence, and the fifth bit sequence as the first concatenated bit sequence.

In another possible design, if both M and P are greater than 1, the RAN node concatenates the bit sequences of the first redundancy versions of the M code blocks according to a specific rule (for example, in descending or ascending order of indexes of the M code blocks) as the first bit sequence, concatenates the bit sequences of the second redundancy versions of the M code blocks according to a specific rule (for example, in descending or ascending order of the indexes of the M code blocks) as the second bit sequence, concatenates the bit sequences of the first redundancy versions of the P code blocks according to a specific rule (for example, in descending or ascending order of indexes of the P code blocks) as the fifth bit sequence, and concatenates the first bit sequence, the second bit sequence, and the fifth bit sequence as the first concatenated bit sequence.

For example, for the foregoing example 3, the RAN node concatenates the bit sequence of the RV 0 of the code block 1 and the bit sequence of the RV 0 of the code block 2 as the first bit sequence, concatenates the bit sequence of the RV 2 of the code block 1 and the bit sequence of the RV 2 of the code block 2 as the second bit sequence, uses the bit sequence of the RV 0 of the code block 3 as the fifth bit sequence, and concatenates the first bit sequence, the second bit sequence, and the fifth bit sequence, to obtain the first concatenated bit sequence shown in (c) in FIG. 5.

It may be understood that the foregoing is merely examples of concatenation of the bit sequences in the first concatenated bit sequence. During specific application, the bit sequences in the first concatenated bit sequence may alternatively be concatenated in another manner. This is not limited.

Optionally, in a possible implementation of the method shown in FIG. 4, the terminal may send feedback information to the RAN node based on the decoding status, so that the RAN node performs link adaptation based on the feedback information, to assist in updating the OLLA parameter of another service. For example, the method shown in FIG. 4 further includes the following optional step.

S403: The terminal sends the feedback information to the RAN node. Correspondingly, the RAN node receives the feedback information from the terminal.

In this application, from a perspective of the RAN node, the feedback information is used to feed back whether transmission of the first bit sequence is correctly performed. Optionally, the feedback information is further used to feed back whether combined transmission of the first bit sequence and the second bit sequence is correctly performed. From a perspective of the terminal, the feedback information is used to feed back whether transmission of the third bit sequence is correctly performed. Optionally, the feedback information is further used to feed back whether combined transmission of the third bit sequence and the fourth bit sequence is correctly performed.

For ease of description, the feedback information is described from the perspective of the RAN node in the following embodiment of this application. It should be understood that the following descriptions are also applicable to the feedback information described from the perspective of the terminal.

In this application, that transmission of the first bit sequence is correctly performed may be understood as that the terminal correctly decodes the first bit sequence. That transmission of the first bit sequence is incorrectly performed may be understood as that the terminal fails to decode the first bit sequence.

Optionally, if the terminal correctly decodes the first bit sequence, the terminal may not send the feedback information.

In this application, that combined transmission of the first bit sequence and the second bit sequence is correctly performed may be understood as that the terminal correctly performs joint decoding on the first bit sequence and the second bit sequence. That combined transmission of the first bit sequence and the second bit sequence is incorrectly performed may be understood as that the terminal fails to perform joint decoding on the first bit sequence and the second bit sequence.

It may be understood that the terminal decodes the first bit sequence to obtain the M code blocks, and the terminal performs joint decoding on the first bit sequence and the second bit sequence to obtain the M code blocks. Therefore, if transmission of the first bit sequence is correctly performed, the terminal may not perform joint decoding on the first bit sequence and the second bit sequence, and does not need to feed back a joint decoding status of the first bit sequence and the second bit sequence. If transmission of the first bit sequence is incorrectly performed, the terminal may perform joint decoding on the first bit sequence and the second bit sequence, to obtain the M code blocks.

For example, the feedback information is used to feed back whether transmission of the first bit sequence is correctly performed, and the feedback information may include 1 bit. If a value of the 1 bit is "0", it indicates that transmission of the first bit sequence is incorrectly performed; or if a value of the 1 bit is "1", it indicates that transmission of the first bit sequence is correctly performed; and vice versa.

For example, the feedback information is used to feed back whether transmission of the first bit sequence is correctly performed, and is used to feed back whether combined transmission of the first bit sequence and the second bit sequence is correctly performed, and the feedback information may include 2 bits. A $1^{st}$ bit may indicate whether transmission of the first bit sequence is correctly performed, and a $2^{nd}$ bit may indicate whether combined transmission of the first bit sequence and the second bit sequence is correctly performed. Specifically, if a value of the $1^{st}$ bit is "0", it indicates that transmission of the first bit sequence is incorrectly performed; or if a value of the $1^{st}$ bit is "1", it indicates that transmission of the first bit sequence is correctly performed; and vice versa. If a value of the $2^{nd}$ bit is "0", it indicates that combined transmission of the first bit sequence and the second bit sequence is incorrectly performed; or if a value of the $2^{nd}$ bit is "1", it indicates that combined transmission of the first bit sequence and the second bit sequence is correctly performed; and vice versa.

In a possible design, when M is greater than 1, if transmission of a bit sequence of a first redundancy version of each code block is correctly performed, the feedback information is used to feed back that transmission of the first bit sequence is correctly performed; or if transmission of a bit sequence of a first redundancy version of any one or more of the M code blocks is incorrectly performed, the feedback information is used to feed back that transmission of the first bit sequence is incorrectly performed. Similarly, when M is greater than 1, if combined transmission of a bit sequence of a first redundancy version of each code block and a bit sequence of a corresponding second redundancy version is correctly performed, the feedback information is used to feed back that combined transmission of the first bit sequence and the second bit sequence is correctly performed; or if combined transmission of a bit sequence of a first redundancy version of any one or more of the M code blocks and a bit sequence of a second redundancy version corresponding to the any one or more of the M code blocks is incorrectly performed, the feedback information is used to feed back that combined transmission of the first bit sequence and the second bit sequence is incorrectly performed.

For example, the first concatenated bit sequence is shown in (b) in FIG. 5. If both the code block 1-RV 0 and the code block 2-RV 0 are correctly decoded, the feedback information is used to feed back that transmission of the first bit sequence is correctly performed. If either or both of the code block 1-RV 0 and the code block 2-RV 0 are incorrectly decoded, the feedback information is used to feed back that transmission of the first bit sequence is incorrectly performed. If joint decoding is correctly performed on the code block 1-RV 0 and the code block 1-RV 2, and joint decoding is correctly performed on the code block 2-RV 0 and the code block 2-RV 2, the feedback information is used to feed back that combined transmission of the first bit sequence and the second bit sequence is correctly performed. If joint decoding is correctly performed on the code block 1-RV 0 and the code block 1-RV 2, and joint decoding is incorrectly performed on the code block 2-RV 0 and the code block 2-RV 2; joint decoding is incorrectly performed on the code block 1-RV 0 and the code block 1-RV 2, and joint decoding is correctly performed on the code block 2-RV 0 and the code block 2-RV 2; or joint decoding is incorrectly performed on the code block 1-RV 0 and the code block 1-RV 2, and joint decoding is incorrectly performed on the code block 2-RV 0 and the code block 2-RV 2, the feedback information is used to feed back that combined transmission of the first bit sequence and the second bit sequence is incorrectly performed.

It may be understood that, after S403, the RAN node may select, based on the feedback information, an MCS index for next data transmission of the first service (for example, the haptic service), and select an MCS index for next data transmission of the second service (for example, the video transmission service). Specifically, the RAN node may select the MCS index for the next data transmission of the first service based on a combined transmission status of the first bit sequence and the second bit sequence, and select the MCS index for the next data transmission of the second service based on a transmission status of the first bit sequence.

Optionally, in a possible implementation of the method shown in FIG. 4, the RAN node may indicate, to the terminal, a location of the second bit sequence in the first concatenated bit sequence, so that the terminal determines a bit that is in the first concatenated bit sequence and that belongs to the second bit sequence and a bit that is in the first concatenated bit sequence and that belongs to the first bit sequence. In this way, the terminal may decode the first bit sequence, and may further perform joint decoding on the first bit sequence and the second bit sequence. For example, the method shown in FIG. 4 further includes the following optional step.

S400: The RAN node sends first indication information to the terminal. Correspondingly, the terminal receives the first indication information from the RAN node.

S400 may alternatively be replaced with the following: The RAN node outputs the first indication information. Correspondingly, the terminal obtains the first indication information.

In this application, that the RAN node outputs the first indication information may be understood as that the RAN node sends the first indication information to another apparatus. For example, the RAN node sends the first indication information to the terminal. Alternatively, that the RAN node outputs the first indication information may be understood as that a RAN node implementing some functions of a base station outputs the first indication information to another RAN node implementing some functions of the base station. For example, a DU outputs the first indication information to an RU.

In this application, that the terminal obtains the first indication information may be understood as that the terminal receives the first indication information from another apparatus. For example, the terminal receives the first indication information from the RAN node. Alternatively, that the terminal obtains the first indication information may be understood as that a module of the terminal obtains the first indication information from another module of the terminal. For example, a baseband processing module of the terminal may restore a baseband signal from a radio frequency module, and then decode the baseband signal to obtain the first indication information.

In this application, the first indication information may indicate the location of the second bit sequence in the first concatenated bit sequence. For example, the first indication information may indicate the location of the second bit sequence in the first concatenated bit sequence in at least any one of the following manners.

Manner 1: The first indication information includes an identifier of a code block with a largest identifier in the first bit sequence. The code block with the largest identifier in the first bit sequence is a code block with a largest identifier in the M code blocks corresponding to the first bit sequence. In this way, the terminal may determine a value of M based on the first indication information, to determine the bit that belongs to the first bit sequence and the bit that belongs to the second bit sequence.

In a possible design, identifiers of the M code blocks are consecutive identifiers starting from a preset start identifier (for example, "0" or "1"). The terminal may determine the value of M based on the identifier of the code block with the largest identifier in the first bit sequence (for example, if the preset start identifier is 1, the terminal may determine a value of the identifier as the value of M; or if a value of the preset start identifier is not 1, the terminal may determine a value obtained by subtracting (x-1) from a value of the identifier as the value of M, where x is the value of the preset start identifier), and determine, based on the value of M and the length of the bit sequence of the first redundancy version of the one of the M code blocks or the length $E_r'$ of the bit sequence of the second redundancy version of the one of the M code blocks, the bit that belongs to the first bit sequence and the bit that belongs to the second bit sequence.

For example, the first concatenated bit sequence is shown in (b) in FIG. 5. For the first concatenated bit sequence shown in (b) in FIG. 5, M is equal to 2, and identifiers of the two code blocks are consecutive identifiers: "1" (an identifier of the code block 1) and "2" (an identifier of the code block 2) starting from "1". The first bit sequence corresponds to two code blocks: the code block 1 and the code block 2. The code block 2 is a code block with a largest identifier in the first bit sequence. Therefore, the first indication information may include "2". The terminal may determine, based on "2", that the value of M is 2, and determine, with reference to $E_r'$, the bit that belongs to the first bit sequence and the bit that belongs to the second bit sequence.

It may be understood that the code block with the largest identifier in the first bit sequence is the same as a code block with a largest identifier in the second bit sequence. Therefore, in Manner 1, the code block with the largest identifier in the first bit sequence may be replaced with the code block with the largest identifier in the second bit sequence. The code block with the largest identifier in the second bit sequence is a code block with a largest identifier in the M code blocks corresponding to the second bit sequence.

Manner 2: The first indication information includes an index of a 1st bit sequence in the second bit sequence in the first concatenated bit sequence. The 1st bit sequence in the second bit sequence is a bit sequence of a second redundancy version of a 1st code block in the first bit sequence. In this way, the terminal may determine the value of M based on the index (for example, if an index of a 1st bit sequence in the first concatenated bit sequence is 0, the terminal may determine a value of the index as the value of M; or if an index of a 1st bit sequence in the first concatenated bit sequence is 1, the terminal may determine a value obtained by subtracting 1 from the index as the value of M), and then determine, based on the value of M and $E_r'$ , the bit that belongs to the first bit sequence and the bit that belongs to the second bit sequence. Optionally, the 1$^{st}$ bit sequence in the first concatenated bit sequence is a bit sequence of a first redundancy version of the 1$^{st}$ code block in the first bit sequence.

For example, the first concatenated bit sequence is shown in (b) in FIG. 5. The first concatenated bit sequence shown in (b) in FIG. 5 includes the first bit sequence and the second bit sequence. The first bit sequence includes the bit sequence of the RV 0 of the code block 1 and the bit sequence of the RV 0 of the code block 2, and the second bit sequence includes the bit sequence of the RV 2 of the code block 1 and the bit sequence of the RV 2 of the code block 2. An index of the bit sequence of the RV 0 of the code block 1 in the first concatenated bit sequence is 0, an index of the bit sequence of the RV 0 of the code block 2 in the first concatenated bit sequence is 1, an index of the bit sequence of the RV 2 of the code block 1 in the first concatenated bit sequence is 2, and an index of the bit sequence of the RV 2 of the code block 2 in the first concatenated bit sequence is 3. The 1$^{st}$ bit sequence in the second bit sequence is the bit sequence of the RV 2 of the code block 1, and the index of the bit sequence of the RV 2 of the code block 1 in the first concatenated bit sequence is 3. Therefore, the first indication information includes the index value 3. In this way, the terminal may determine a value obtained by subtracting 1 from the index value as the value of M, that is, the value of M is 2, and determine, with reference to $E_r'$ , the bit that belongs to the first bit sequence and the bit that belongs to the second bit sequence.

Manner 3: The first indication information includes an index of a last bit sequence in the first bit sequence in the first concatenated bit sequence. The last bit sequence in the first bit sequence is a bit sequence of a first redundancy version of a last code block in the first bit sequence. In this way, the terminal may determine the value of M based on the index (for example, if an index of a 1$^{st}$ bit sequence in the first concatenated bit sequence is 0, the terminal may determine a value obtained by adding 1 to the index as the value of M; or if an index of a 1$^{st}$ bit sequence in the first concatenated bit sequence is 1, the terminal may determine a value of the index as the value of M), and then determine, based on the value of M and $E_r'$ , the bit that belongs to the first bit sequence and the bit that belongs to the second bit sequence.

For example, the first concatenated bit sequence is shown in (b) in FIG. 5. The first concatenated bit sequence shown in (b) in FIG. 5 includes the first bit sequence and the second bit sequence. The first bit sequence includes the bit sequence of the RV 0 of the code block 1 and the bit sequence of the RV 0 of the code block 2, and the second bit sequence includes the bit sequence of the RV 2 of the code block 1 and the bit sequence of the RV 2 of the code block 2. An index of the bit sequence of the RV 0 of the code block 1 in the first concatenated bit sequence is 1, an index of the bit sequence of the RV 0 of the code block 2 in the first concatenated bit sequence is 2, an index of the bit sequence of the RV 2 of the code block 1 in the first concatenated bit sequence is 3, and an index of the bit sequence of the RV 2 of the code block 2 in the first concatenated bit sequence is 4. The last bit sequence in the first bit sequence is the bit sequence of the RV 0 of the code block 2, and the index of the bit sequence of the RV 0 of the code block 2 in the first concatenated bit sequence is 2. Therefore, the first indication information includes the index value 2. In this way, the terminal may determine the index value as the value of M, that is, the value of M is 2, and determine, with reference to $E_r'$ , the bit that belongs to the first bit sequence and the bit that belongs to the second bit sequence.

Optionally, the first indication information further indicates at least one of the following: the index of the second redundancy version, a location of the first bit sequence in the first concatenated bit sequence, or M.

The location of the first bit sequence in the first concatenated bit sequence may be indicated by the index of the last bit sequence in the first bit sequence in the first concatenated bit sequence, or may be indicated by an index of a 1$^{st}$ bit sequence in the first bit sequence in the first concatenated bit sequence and M. The 1$^{st}$ bit sequence in the first bit sequence is a bit sequence of a first redundancy version of a 1$^{st}$ code block in the first bit sequence.

It may be understood that if the first indication information further indicates the index of the second redundancy version, the terminal may determine a redundancy version of the code block in the second bit sequence. If the first indication information further indicates the location of the first bit sequence in the first concatenated bit sequence, the terminal may determine the bit that is in the first concatenated bit sequence and that belongs to the first bit sequence. If the first indication information further indicates M, the terminal may determine a quantity of code blocks included in the first bit sequence and a quantity of code blocks included in the second bit sequence.

For example, the first concatenated bit sequence is shown in (b) in FIG. 5. The first concatenated bit sequence shown in (b) in FIG. 5 includes the first bit sequence and the second bit sequence. The first bit sequence includes the bit sequence of the RV 0 of the code block 1 and the bit sequence of the RV 0 of the code block 2, and the second bit sequence includes the bit sequence of the RV 2 of the code block 1 and the bit sequence of the RV 2 of the code block 2. An index of the bit sequence of the RV 0 of the code block 1 in the first concatenated bit sequence is 1, an index of the bit sequence of the RV 0 of the code block 2 in the first concatenated bit sequence is 2, an index of the bit sequence of the RV 2 of the code block 1 in the first concatenated bit sequence is 3, and an index of the bit sequence of the RV 2 of the code block 2 in the first concatenated bit sequence is 4. The first indication information further includes at least one of the following: an index value 2 of the second redundancy version, an index value 2 of the last bit sequence in the first bit sequence in the first concatenated bit sequence, or a value 2 of M.

It may be understood that the foregoing is described from a perspective of the RAN node. If the foregoing is described from a perspective of the terminal, the first indication information indicates a location of the fourth bit sequence in the second concatenated bit sequence. Optionally, the first indication information further indicates at least one of the following: the index of the second redundancy version, a location of the third bit sequence in the second concatenated bit sequence, or M.

Optionally, the first indication information is carried in DCI.

The actions of the terminal or the RAN node in S401 to S403 and S400 may be performed by the processor 301 in the communication apparatus 30 shown in FIG. 3 by invoking the application program code stored in the memory 303. This is not limited in this application.

In the method shown in FIG. 4, the data transmission method provided in this application is described by using an example in which the RAN node is a transmitting end of to-be-sent information and the terminal is a receiving end of the to-be-sent information. The following describes the data transmission method provided in this application by using an example in which the terminal is a transmitting end of to-be-sent information and the RAN node is a receiving end of the to-be-sent information.

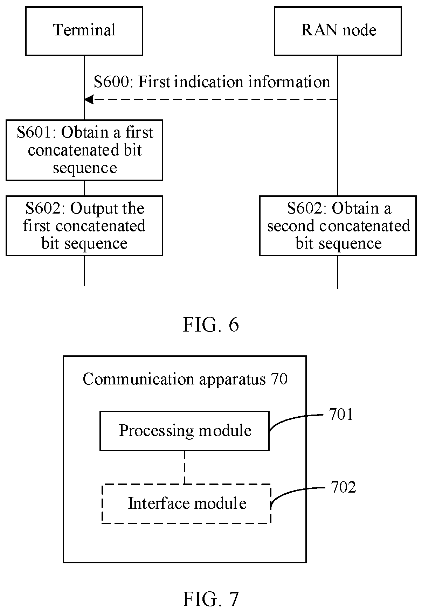

FIG. 6 shows another data transmission method according to this application. The method may include the following steps.

S601: A terminal obtains a first concatenated bit sequence.

It may be understood that a process in which the terminal obtains the first concatenated bit sequence is similar to a process in which a RAN node obtains the first concatenated bit sequence. Therefore, refer to corresponding descriptions in S401 and S4011 to S4014. Details are not described herein again.

S602: The terminal outputs the first concatenated bit sequence. Correspondingly, the RAN node obtains a second concatenated bit sequence.

That the terminal outputs the first concatenated bit sequence may be understood as that the terminal sends the first concatenated bit sequence to another apparatus. For example, the terminal sends the first concatenated bit sequence to the RAN node. It may be understood that before sending the first concatenated bit sequence to the RAN node, the terminal may perform necessary processing (for example, modulation and resource mapping) on the first concatenated bit sequence.

That the terminal outputs the first concatenated bit sequence may alternatively be understood as that a module of the terminal outputs the first concatenated bit sequence to another module of the terminal. For example, a module that is responsible for rate matching or code block concatenation and that is of the terminal outputs the first concatenated bit sequence to a module (for example, a module responsible for modulation) that subsequently processes the first concatenated bit sequence. It should be understood that after obtaining the first concatenated bit sequence, the another module of the terminal may perform necessary processing (for example, modulation) on the first concatenated bit sequence.

That the RAN node obtains the second concatenated bit sequence may be understood as that the RAN node obtains the second concatenated bit sequence from another apparatus. For example, the RAN node receives the second concatenated bit sequence from the terminal. Alternatively, that the RAN node obtains the second concatenated bit sequence may be understood as that a module of the RAN node obtains the first concatenated bit sequence from another module of the RAN node. For example, a module that is responsible for de-rate matching or de-code block concatenation and that is of the RAN node may obtain the second concatenated bit sequence from a demodulation module.

It may be understood that, after S602, the RAN node may decode a third bit sequence, and perform joint decoding on the third bit sequence and a fourth bit sequence. In this way, the RAN node may perform link adaptation for data of a first service and link adaptation for data of a second service based on a decoding status. For example, the RAN node may select an MCS index for next data transmission of the first service based on a combined transmission status of the third bit sequence and the fourth bit sequence, and select an MCS index for next data transmission of the second service based on a transmission status of the third bit sequence.

For other descriptions in S602, refer to corresponding descriptions in S402. Details are not described again.

According to the method shown in FIG. 6, the terminal may obtain the first concatenated bit sequence, and output the first concatenated bit sequence, so that the RAN node can decode the second concatenated bit sequence. During the decoding, the RAN node not only decodes the third bit sequence in the second concatenated bit sequence, but also performs joint decoding on the third bit sequence and the fourth bit sequence in the second concatenated bit sequence, and performs link adaptation based on the decoding status. In this way, the RAN node may perform link adaptation based on a decoding status of the third bit sequence, to assist in updating an OLLA parameter of another service. In addition, a second bit sequence includes a bit sequence whose RV is different from that of a bit sequence included in a first bit sequence. Therefore, transmission reliability of data in the first bit sequence can be ensured by using the second bit sequence.

Optionally, in a possible implementation of the method shown in FIG. 6, the RAN node may indicate, to the terminal, a location of the second bit sequence in the first concatenated bit sequence, so that the terminal determines locations of the first bit sequence and the second bit sequence in the first concatenated bit sequence, and then the terminal generates the first concatenated bit sequence. For example, the method shown in FIG. 6 further includes the following step.

S600: The RAN node sends first indication information to the terminal. Correspondingly, the terminal receives the first indication information from the RAN node.

For descriptions of S600, refer to corresponding descriptions in S400. Details are not described herein again.

The actions of the terminal or the RAN node in S601, S602, and S600 may be performed by the processor 301 in the communication apparatus 30 shown in FIG. 3 by invoking the application program code stored in the memory 303. This is not limited in this application.

Embodiments mentioned above in this application may be combined when the solutions do not conflict. This is not limited.

The foregoing mainly describes, from a perspective of interaction between network elements, the solutions provided in this application. Correspondingly, this application further provides a communication apparatus. The communication apparatus may be the RAN node in the foregoing method embodiments, an apparatus including the foregoing RAN node, or a component that can be used in the RAN node. Alternatively, the communication apparatus may be the terminal in the foregoing method embodiments, an apparatus including the foregoing terminal, or a component that can be used in the terminal. It may be understood that to implement the foregoing functions, the foregoing RAN node or terminal includes corresponding hardware structures and/or software modules for performing the functions. A person skilled in the art should be easily aware that, in combination with examples of units and algorithm operations described in embodiments disclosed in this specification, this application can be implemented by using hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

It should be understood that the foregoing uses only the terminal and the RAN node as an example to describe interaction between network elements. Actually, processing performed by the terminal is not limited to being performed only by a single network element, and processing performed by the RAN node is not limited to being performed only by a single network element. For example, the processing performed by the RAN node may be performed by at least one of a CU, a DU, and an RU.

In this application, functional modules of the RAN node or the terminal may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that, in this application, module division is an example, and is merely logical function division. In actual implementation, there may be another division manner.

For example, when the functional modules are obtained through division in an integrated manner, FIG. 7 is a diagram of a structure of a communication apparatus 70. The communication apparatus 70 includes a processing module 701. Optionally, the communication apparatus 70 further includes an interface module 702. The processing module 701 may also be referred to as a processing unit, and is configured to perform an operation other than receiving and sending operations. For example, the processing module may be a processing circuit or a processor. The interface module 702 may also be referred to as an interface unit, and is configured to perform the receiving and sending operations. For example, the interface module may be an interface circuit, a transceiver machine, a transceiver, or a communication interface.

In some embodiments, the communication apparatus 70 may further include a storage module (not shown in FIG. 7), configured to store program instructions and data.

For example, the communication apparatus 70 is configured to implement a function of a transmitting end of to-be-sent information. For example, the communication apparatus 70 is the RAN node in the embodiment shown in FIG. 4, or the terminal in the embodiment shown in FIG. 6.

The processing module 701 is configured to obtain a first concatenated bit sequence. The first concatenated bit sequence includes a first bit sequence and a second bit sequence, the first bit sequence is bit sequences of first redundancy versions of M code blocks, the second bit sequence is bit sequences of second redundancy versions of the M code blocks, and M is a positive integer. For example, the processing module 701 is configured to perform S401 or S601.

The interface module 702 is configured to output the first concatenated bit sequence. For example, the interface module 702 is configured to perform S402 or S602.

In a possible implementation, the interface module 702 is further configured to receive feedback information, where the feedback information is used to feed back whether transmission of the first bit sequence is correctly performed.

In a possible implementation, the feedback information is further used to feed back whether combined transmission of the first bit sequence and the second bit sequence is correctly performed.

In a possible implementation, the interface module 702 is further configured to receive or send first indication information, where the first indication information indicates a location of the second bit sequence in the first concatenated bit sequence.

In a possible implementation, the first indication information further indicates at least one of the following: an index of the second redundancy version, a location of the first bit sequence in the first concatenated bit sequence, or M.

In a possible implementation, a length of a bit sequence of a first redundancy version of one of the M code blocks or a length of a bit sequence of a second redundancy version of one of the M code blocks is related to M.

In a possible implementation, the first bit sequence is concatenated with the second bit sequence, and the first bit sequence is located before the second bit sequence.

In a possible implementation, an index of the first redundancy version is 0, and the index of the second redundancy version is 1, 2, or 3.

When the communication apparatus 70 is configured to implement the function of the transmitting end of the to-be-sent information, for another function that can be implemented by the communication apparatus 70, refer to related descriptions of the method embodiment shown in FIG. 4 or the method embodiment shown in FIG. 6. Details are not described again.

Alternatively, for example, the communication apparatus 70 is configured to implement a function of a receiving end of the to-be-sent information. For example, the communication apparatus 70 is the terminal in the embodiment shown in FIG. 4, or the RAN node in the embodiment shown in FIG. 6.

The processing module 701 is configured to obtain a second concatenated bit sequence. The second concatenated bit sequence includes a third bit sequence and a fourth bit sequence, the third bit sequence corresponds to first redundancy versions of M code blocks, the fourth bit sequence corresponds to second redundancy versions of the M code blocks, and M is a positive integer. For example, the processing module 701 is configured to perform S402 or S602.

In a possible implementation, the interface module 702 is configured to send feedback information, where the feedback information is used to feed back whether transmission of the third bit sequence is correctly performed.

In a possible implementation, the feedback information is further used to feed back whether combined transmission of the third bit sequence and the fourth bit sequence is correctly performed.

In a possible implementation, the interface module 702 is further configured to receive or send first indication information, where the first indication information indicates a location of the fourth bit sequence in the second concatenated bit sequence.

In a possible implementation, the first indication information further indicates at least one of the following: an index of the second redundancy version, a location of the third bit sequence in the second concatenated bit sequence, or M.

In a possible implementation, a length of a bit sequence of a first redundancy version of one of the M code blocks or a length of a bit sequence of a second redundancy version of one of the M code blocks is related to M.

In a possible implementation, the third bit sequence is concatenated with the fourth bit sequence, and the third bit sequence is located before the fourth bit sequence.

In a possible implementation, an index of the first redundancy version is 0, and the index of the second redundancy version is 1, 2, or 3.

When the communication apparatus 70 is configured to implement the function of the receiving end of the to-be-sent information, for another function that can be implemented by the communication apparatus 70, refer to related descriptions of the embodiment shown in FIG. 4 or the embodiment shown in FIG. 6. Details are not described again.

In a simple embodiment, a person skilled in the art may figure out that the communication apparatus 70 may be in a form shown in FIG. 3. For example, the processor 301 in FIG. 3 may invoke the computer-executable instructions stored in the memory 303, to enable the communication apparatus 70 to perform the method in the foregoing method embodiment.

For example, functions/implementation processes of the processing module 701 and the interface module 702 in FIG. 7 may be implemented by the processor 301 in FIG. 3 by invoking the computer-executable instructions stored in the memory 303. Alternatively, a function/an implementation process of the processing module 701 in FIG. 7 may be implemented by the processor 301 in FIG. 3 by invoking the computer-executable instructions stored in the memory 303, and a function/an implementation process of the interface module 702 in FIG. 7 may be implemented by the communication interface 304 in FIG. 3.

It may be understood that, one or more of the foregoing modules or units may be implemented by using software, hardware, or a combination thereof. When any one of the foregoing modules or units is implemented by using software, the software exists in a form of a computer program instruction, and is stored in the memory. The processor may be configured to: execute the program instruction and implement the foregoing method procedure. The processor may be built into a SoC (system on chip) or an ASIC, or may be an independent semiconductor chip. In addition to a core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedure.

Optionally, this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete device. This is not specifically limited in this application.

Optionally, this application further provides a computer-readable storage medium. All or some of the procedures in the foregoing method embodiments may be completed by a computer program instructing related hardware. The program may be stored in the foregoing computer-readable storage medium. When the program is executed, the procedures in the foregoing method embodiments may be included. The computer-readable storage medium may be an internal storage unit of the communication apparatus according to any one of the foregoing embodiments, for example, a hard disk drive or an internal memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the foregoing computer program and store other programs and data that are needed by the communication apparatus. The computer-readable storage medium may be further configured to temporarily store data that has been output or is to be output.

Optionally, this application further provides a computer program product. All or some of the procedures in the foregoing method embodiments may be completed by a computer program instructing related hardware. The program may be stored in the foregoing computer program product. When the program is executed, the procedures in the foregoing method embodiments may be included.

Optionally, this application further provides computer instructions. All or some of the procedures in the foregoing method embodiments may be completed by the computer instructions instructing related hardware (for example, a computer, a processor, a RAN node, or a terminal). The program may be stored in the computer-readable storage medium or the computer program product.

Optionally, this application further provides a communication system, including the RAN node and the terminal in the foregoing embodiments.

Based on the descriptions of the foregoing implementations, a person skilled in the art may clearly understand that for the purpose of convenient and brief description, division into the foregoing functional modules is merely used as an example for description. During actual application, the foregoing functions may be allocated to different functional modules for implementation based on a need, in other words, an inner structure of the apparatus is divided into different functional modules to implement all or some of the functions described above.

In the several embodiments provided in this application, it should be understood that the disclosed apparatus and method may be implemented in other manners. For example, the foregoing described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual needs to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A data transmission method, wherein the method comprises:

   obtaining a first concatenated bit sequence, wherein the first concatenated bit sequence comprises a first bit sequence and a second bit sequence, the first bit sequence is bit sequences of first redundancy versions of M code blocks, the second bit sequence is bit sequences of second redundancy versions of the M code blocks, and M is a positive integer; and
   outputting the first concatenated bit sequence.

2. The method according to claim 1, wherein the method further comprises:
   receiving feedback information, wherein the feedback information is used to feed back whether transmission of the first bit sequence is correctly performed.

3. The method according to claim 2, wherein the feedback information is further used to feed back whether combined transmission of the first bit sequence and the second bit sequence is correctly performed.

4. The method according to any one of claims 1 to 3, wherein the method further comprises:
   receiving or sending first indication information, wherein the first indication information indicates a location of the second bit sequence in the first concatenated bit sequence.

5. The method according to claim 4, wherein the first indication information further indicates at least one of the following: an index of the second redundancy version, a location of the first bit sequence in the first concatenated bit sequence, or M.

6. The method according to any one of claims 1 to 5, wherein a length of a bit sequence of a first redundancy version of one of the M code blocks or a length of a bit sequence of a second redundancy version of one of the M code blocks is related to M.

7. The method according to any one of claims 1 to 6, wherein the first bit sequence is concatenated with the second bit sequence, and the first bit sequence is located before the second bit sequence.

8. The method according to any one of claims 1 to 7, wherein an index of the first redundancy version is 0, and the index of the second redundancy version is 1, 2, or 3.

9. A communication apparatus, wherein the communication apparatus comprises a processing module and an interface module, wherein

   the processing module is configured to obtain a first concatenated bit sequence, wherein the first concatenated bit sequence comprises a first bit sequence and a second bit sequence, the first bit sequence is bit sequences of first redundancy versions of M code blocks, the second bit sequence is bit sequences of second redundancy versions of the M code blocks, and M is a positive integer; and
   the interface module is configured to output the first concatenated bit sequence.

10. The communication apparatus according to claim 9, wherein
    the interface module is further configured to receive feedback information, wherein the feedback information is used to feed back whether transmission of the first bit sequence is correctly performed.

11. The communication apparatus according to claim 10, wherein the feedback information is further used to feed back whether combined transmission of the first bit sequence and the second bit sequence is correctly performed.

12. The communication apparatus according to any one of claims 9 to 11, wherein
    the interface module is further configured to receive or send first indication information, wherein the first indication information indicates a location of the second bit sequence in the first concatenated bit sequence.

13. The communication apparatus according to claim 12, wherein the first indication information further indicates at least one of the following: an index of the second redundancy version, a location of the first bit sequence in the first concatenated bit sequence, or M.

14. The communication apparatus according to any one of claims 9 to 13, wherein a length of a bit sequence of a first redundancy version of one of the M code blocks or a length of a bit sequence of a second redundancy version of one of the M code blocks is related to M.

15. The communication apparatus according to any one of claims 9 to 14, wherein the first bit sequence is concatenated with the second bit sequence, and the first bit sequence is located before the second bit sequence.

16. The communication apparatus according to any one of claims 9 to 15, wherein an index of the first redundancy version is 0, and the index of the second redundancy version is 1, 2, or 3.

17. A communication apparatus, comprising a processor, wherein the processor is coupled to a memory, the memory is configured to store a program or instructions, and when the program or the instructions are executed by the processor, the apparatus is enabled to perform the method according to any one of claims 1 to 8.

18. A chip, comprising a processor, wherein the processor is coupled to a memory, the memory is configured to store a program or instructions, and when the program or the instructions are executed by the processor, the chip is enabled to perform the method according to any one of claims 1 to 8.

19. A computer-readable storage medium, wherein the computer-readable storage medium stores a computer program or instructions, and when the computer program or the instructions are executed, a computer is enabled to perform the method according to any one of claims 1 to 8.

20. A computer program product, wherein the computer program product comprises computer program code, and when the computer program code is run on a computer, the computer is enabled to implement the method according to any one of claims 1 to 8.

21. A communication apparatus, comprising a module configured to implement the method according to any one of claims 1 to 8.

22. A communication system, comprising a communication apparatus configured to implement the method according to any one of claims 1 to 8.

FIG. 1A

FIG. 1B

$$N_{info}' = \max\left(24, 2^n \times \left\lfloor \frac{N_{info}}{2^n} \right\rfloor\right),$$

where $n = \max(3, \lfloor \log_2(N_{info}) \rfloor - 6)$

Query Table 5.1.3.2-1 in 3GPP 38.214 to find a closest TBS that is not less than $N_{info}'$

$N_{info} \leq 3824$

Yes

No

$$N_{info}' = \max\left(3824, 2^n \times round((N_{info} - 24)/2^n)\right),$$

where $n = \lfloor \log_2(N_{info} - 24) \rfloor - 5$

$R \leq 1/4$

Yes

$$TBS = 8 \times C \times \left\lceil \frac{N_{info}' + 24}{8 \times C} \right\rceil - 24,$$

where $C = \left\lceil \frac{N_{info}' + 24}{3816} \right\rceil$

No

$N_{info}' > 8424$

Yes

$$TBS = 8 \times C \times \left\lceil \frac{N_{info}' + 24}{8 \times C} \right\rceil - 24,$$

where $C = \left\lceil \frac{N_{info}' + 24}{8424} \right\rceil$

No

$$TBS = 8 \times \left\lceil \frac{N_{info}' + 24}{8 \times C} \right\rceil - 24,$$

where C=1, and a total length of an output bit sequence does not exceed a maximum length of one BG 1

FIG. 1C

FIG. 2

FIG. 3

| Terminal | | RAN node |
| --- | --- | --- |

S400: First indication information

S401: Obtain a first concatenated bit sequence

S402: Obtain a second concatenated bit sequence

S402: Output the first concatenated bit sequence

S403: Feedback information

FIG. 4

| Code block 1-RV 0 | Code block 1-RV 2 |
| --- | --- |
| First bit sequence | Second bit sequence |

(a)

| Code block 1-RV 0 | Code block 2-RV 0 | Code block 1-RV 2 | Code block 2-RV 2 |
| --- | --- | --- | --- |
| First bit sequence | | Second bit sequence | |

(b)

| Code block 1-RV 0 | Code block 2-RV 0 | Code block 1-RV 2 | Code block 2-RV 2 | Code block 3-RV 0 |
| --- | --- | --- | --- | --- |
| First bit sequence | | Second bit sequence | | Fifth bit sequence |

(c)

FIG. 5

Terminal

RAN node

S600: First indication information

S601: Obtain a first concatenated bit sequence

S602: Output the first concatenated bit sequence

S602: Obtain a second concatenated bit sequence

FIG. 6

Communication apparatus 70

Processing module — 701

Interface module — 702

FIG. 7

## INTERNATIONAL SEARCH REPORT

| | International application No. |
|---|---|
| | **PCT/CN2024/070345** |

**A.    CLASSIFICATION OF SUBJECT MATTER**

H04W24/02(2009.01)i

According to International Patent Classification (IPC) or to both national classification and IPC

**B.    FIELDS SEARCHED**

Minimum documentation searched (classification system followed by classification symbols)

IPC：H04W,H04L,H04B

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 版本, 比特, 比特序列, 合并, 级联, 结合, 开环链路自适应, 联合, 联接, 联结, 连接, 连结, 冗余版本, 序列, 组合, adaptation, adaption, bit, conjoint, connect, link, loop, OLLA, open, RV, sequence, version, redundan+, join+, combin+, cascad+

**C.    DOCUMENTS CONSIDERED TO BE RELEVANT**

| Category* | Citation of document, with indication, where appropriate, of the relevant passages | Relevant to claim No. |
|---|---|---|
| X | CN 113691300 A (HUAWEI TECHNOLOGIES CO., LTD.) 23 November 2021 (2021-11-23) description, paragraphs 78-168 | 1-22 |
| A | CN 102739378 A (SOUTHEAST UNIVERSITY) 17 October 2012 (2012-10-17) entire document | 1-22 |
| A | CN 110730054 A (POTEVIO INFORMATION TECHNOLOGY CO., LTD.) 24 January 2020 (2020-01-24) entire document | 1-22 |
| A | CN 111490858 A (HUAWEI TECHNOLOGIES CO., LTD.) 04 August 2020 (2020-08-04) entire document | 1-22 |
| A | US 2018375616 A1 (SONY CORP.) 27 December 2018 (2018-12-27) entire document | 1-22 |
| A | APPLE INC. "Views on URLLC CSI feedback enhancements" *3GPP TSG- RAN WG1 Meeting #104b-e, R1-2103104*, 20 April 2021 (2021-04-20), entire document | 1-22 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 March 2024** | **21 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070345**

| Patent document cited in search report | | | Publication date (day/month/year) | Patent family member(s) | | | Publication date (day/month/year) |
|---|---|---|---|---|---|---|---|
| CN | 113691300 | A | 23 November 2021 | WO | 2020134821 | A1 | 02 July 2020 |
| | | | | CN | 111371527 | A | 03 July 2020 |
| | | | | EP | 3886349 | A1 | 29 September 2021 |
| | | | | US | 2021320748 | A1 | 14 November 2021 |
| | | | | JP | 2022515268 | W | 17 February 2022 |
| | | | | RU | 2782241 | C1 | 25 October 2022 |
| CN | 102739378 | A | 17 October 2012 | None | | | |
| CN | 110730054 | A | 24 January 2020 | None | | | |
| CN | 111490858 | A | 04 August 2020 | WO | 2020156468 | A1 | 06 August 2020 |
| | | | | EP | 3890426 | A1 | 06 October 2021 |
| | | | | US | 2021391958 | A1 | 16 December 2021 |
| US | 2018375616 | A1 | 27 December 2018 | EP | 3378180 | A1 | 26 September 2018 |
| | | | | WO | 2017084903 | A1 | 26 May 2017 |
| | | | | CN | 108292976 | A | 17 July 2018 |

Form PCT/ISA/210 (patent family annex) (July 2022)

**EP 4 622 323 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202310118807 A